# EUROPEAN PATENT APPLICATION

(11) **EP 3 401 355 A1**
(43) Date of publication of application: **14.11.2018**
(21) Application number: 17170901.7
(22) Date of filing: 12.05.2017
(51) Int. Cl.: C08J 5/04

(54) **POLYAMIDE MATERIAL**

(71) Applicant: Ecole Polytechnique Fédérale de Lausanne (EPFL), 1015 Lausanne (CH)
(72) Inventor: FRAUENRATH, Holger, 1007 Lausanne (CH); PLUMMER, Chris, 1026 Echandens (CH); GALLAND, Sylvain, 1630 Bulle (CH); CANDAU, Nicolas, 1012 Lausanne (CH)
(74) Representative: Cohausz & Florack

(57) **Abstract**

The invention relates to a polyamide material containing a polyamide as the matrix polyamide and fibrillar polyamide particles, wherein at least 10 vol.% of the fibrillar polyamide particles, based on the total volume of the fibrillar polyamide particles, have a diameter of 5 to 1000 nm, and wherein the polyamide molecules that make up the surface of the fibrillar polyamide particles are connected with the matrix polyamide by covalent bonds. The invention further relates to a method for the preparation of a polyamide material according to the invention, a polyamide material obtainable by the method according to the invention, the use of the polyamide material according to the invention for the manufacture of molded parts, fibers or foils, and molded parts, fibers or foils containing a polyamide material according to the invention.

## Description

The invention relates to a polyamide material, a method for the preparation of the polyamide material, the use of the polyamide material, and molded parts, fibers or foils containing the polyamide material.

Polyamide materials are frequently used in engineering. In particular, fiber-reinforced polyamide thermoplastics are among the most sought-after engineering materials for lightweighting in the automotive industry. The great interest mainly results from the excellent heat resistance of fiber-reinforced polyamides and their strength and stiffness comparable to metals.

Fiber-reinforced polyamide materials usually contain a matrix polyamide and a fibrous material. Organic fibers with a high tenacity such as aramid fibers are an example of a fibrous material. Organic fibers with a high tenacity such as aramid fibers may also be an example of fibrillar particles. Individual organic fibers such as individual aramid fibers are usually constituted from smaller particles, in particular fibrils and/or bundles of fibrils. The fibrils and bundles of fibrils are examples of fibrillar particles. The fibrils and the bundles of fibrils generally have a smaller cross-section than the fibers. In the case of aramid fibers, the fibrils normally contain polyamide polymer chains. In the core of the fibril, the polyamide polymer chains are usually highly oriented such that crystalline phases result. In the sheath of the fibrils, the polyamide polymer chains are usually not oriented and may be amorphous. Methods have been developed in particular for aramid fibers to split up the fibers into particles with a cross-section with a smaller area and/or a smaller diameter than the fibers that contain one or more fibrils as described below. This process is normally called fibrillation, and the resulting fibrillar material is often called fibrillated or pulped fiber.

Among the most frequently used polyamide matrices are poly(epsilon-caprolactam) (PA6), poly(hexamethylene adipamide) (PA66), specialty polyamides such as poly(hexamethylene sebacoamide) (PA610), poly(tetramethylene adipamide) (PA46) as well as a range of high performance semiaromatic polyamide random copolymers (see I.B. Page, Polyamides as Engineering Thermoplastic Materials, RAPRA, 200, pp 11-15).

Fiber-reinforced polyamide materials are increasingly used in cooling, electrical or fuel systems. They are also used in a wide variety of structural and semi-structural components, such as brackets and accelerator pedals.

Despite their good properties and frequent use, fiber-reinforced polyamides have only been partly successful in replacing high-strength steels and light metal alloys because of their low ductility and reduced strength perpendicular to the main fiber direction. Both characteristics severely limit their impact resistance and are therefore incompatible with increasingly stringent technical requirements and safety standards.

It is well known that the inclusion of high tenacity organic fibers in a polymeric matrix can increase the strength and stiffness of the matrix at reduced weight compared with glass and carbon fiber-reinforced polymers. However, poor fiber-matrix adhesion often limits the performance of such materials. This drawback has led to the concept of so-called "self-reinforced composite materials" comprising a matrix, in particular a thermoplastic matrix, reinforced by fibers from the same or a chemically very similar polymer. In this way, the interfacial, thermal and mechanical properties can be improved. Thus, polyamide matrices have been combined for example with continuous aramid fiber reinforcements with the aim of limiting the chemical mismatch at the fiber-matrix interface, whereby the term "continuous fiber" refers to fibers that are significantly longer than at least one of the dimensions of the reinforced molded part. In this way, unidirectional polyamide-aramid composites were prepared. These unidirectional polyamide-aramid composites have been found to show better interfacial adhesion than epoxy-aramid composites. However, the previously reported self-reinforced composites with continuous aramid fiber reinforcements (see, for example, Á. Kmetty, T. Bárány, J. Karger-Kocsis, Prog. Polym. Sci. 2000, 35, 1288) have the drawback that they exhibit a limited compatibility with high-throughput melt-processing methods (extrusion, injection molding). Moreover, the continuous fiber reinforcements are normally non-covalently bound to the polyamide matrix in unidirectional polyamide-aramid composites. By contrast, in particular, the discontinuous fiber reinforcements preferably used in the current invention are compatible with high-throughput melt-processing methods (extrusion, injection molding) and/or they are covalently bound to the polyamide matrix.

In addition to continuous aramid fibers, also discontinuous chopped aramid fibers are known for example from US 3 063 966 A, US 3 133 138 A, US 3 767 756 A, and US 3 869 430 A. Due to their high stiffness, strength, deformability, low density and thermal stability, these discontinuous chopped aramid fibers are also used extensively in engineering materials, often in combination with glass or carbon fiber to form hybrid composites. Matrix materials for these composites include a range of polyamides. For example, fiber-reinforced polyamides using polyamide 66 as the matrix material and containing short chopped aramid fibers have been available commercially since the 1980's, for example sold under the trade names Hydlar Z™ and Unipa™. These materials are well known for their abrasion and wear resistance. Typically, these materials are used in the manufacture of bearings, bushings and rollers etc. (see for example N. Klein, G. Marom, E. Wachtel, Polymer 1996, 37, 5493; H. Nuriel, N. Klein, G. Marom, Compos. Sci. Technol. 1999, 59, 1685; A.Y. Feldman, E. Wachtel, N.E. Zafeiropoulos, K. Schneider, M. Stamm, R.J. Davies, A. Weinberg, G. Marom, Compos. Sci. Technol. 2006, 66, 2009).

Highly fibrillated aramid pulps produced from aramid fibers in a separate milling operation are well known from the state of the art, for example from US 5 028 372 A, US 5 084 136 A, and US 5 532 059 A and have become commercially available within the last 15 years. Aramid pulps are used mainly as specialty additives to provide mechanical reinforcement to polymers and enhance abrasion resistance. They are often employed as a substitute for asbestos in rubber and thermoplastic parts such as automotive brake linings or pads, gaskets, and automatic transmission papers. The materials containing these aramid pulps are usually produced by *ad hoc* dry or wet mixing procedures with other fillers and the resin (see for example US 4 871 004 A).

Compared with traditional reinforcing agents for elastomers such as carbon black and silica that are normally not used in a fibrillar form, aramid pulp provides superior reinforcement at much lower loadings. Advantages of aramid pulp-reinforced elastomers include high low-strain modulus, property anisotropy, greater cut and abrasion resistance, improved wear performance and, in tire stocks, lower rolling resistance. These attributes are achieved only when the pulp is well dispersed in the polymer matrix. However, direct dispersion of aramid pulp in a polymer matrix by extrusion compounding is known to be difficult because of phenomena such as clumping, and requires extensive mixing in internal mixers, masticators, extruders, etc. (see for example US 5 439 623 A). Such extensive mixing often breaks down the polymer (polymer chain breakage) effectively lowering the polymer molar mass, with undesirable consequences for the final properties. Extensive mixing in internal mixers, masticators, extruders, etc. is also well known to degrade other additives such as conventional short fiber reinforcements. Compounding therefore necessitates additional steps in the manufacturing process such as additional surface treatments or moistening of the aramid pulp (see for example US 5 830 395 A, US 4 811 908 A), the use of conducting particle additives to reduce electrostatic interactions between the fibrillar particles of the pulp, the use of prefabricated concentrated pulp master batches containing wetting agents, surfactants, oils and resins, and/or the use of dry mixtures of fibrillated aramid fibers and conventional fibers in place of the aramid pulp, particularly in order to achieve good dispersion of the aramid pulp in the matrix. However, all of these methods have met with limited success. Moreover, they require additional steps in the manufacturing process.

In addition to the mechanical fibrillation in the preparation of aramid pulp, aramid fibers are known to undergo fibrillation during melt processing (see for example Z. Yu, J. Brisson, A. Ait-kadi. A., Polym. Compos. 1994, 15, 64). However, covalent bonding between the fibrillar particles, in particular the fibers and/or the fibrils, and the polyamide matrix has not been reported in chopped aramid fiber-reinforced polyamides, and has not been used to promote fiber-matrix and/or fibril-matrix adhesion and dispersion of the fibrillated aramid fibers in these materials. Indeed, poor adhesion between thermoplastic matrices, including polyamides, and aramid fibers or the aramid pulp that results from extensive fibrillation of aramid fibers remains critical for performance in conventional aramid fiber-reinforced composites, owing to the smooth surfaces and sterically inaccessible functional groups of the fibers (J. Kalantar, L.T. Drzal, J. Mater. Sci. 1990, 25, 4186). Improved adhesion has consequently been sought through modification of the fiber surfaces prior to mixing them with the matrix. This modification has included plasma activation, hydrolysis, mechanical roughening and chemical modification, e.g. anionic graft polymerization of epsilon-caprolactam from activated fibers, which has been used to produce aramid fiber-reinforced polyamide 6 with molecular continuity at the fiber-matrix interface (see E.Y. Kim, S.K. An, H.D. Kim, H.D., J. Appl. Polym. Sci. 1997,65,99). However, in contrast with the present invention, the methods of surface grafting hitherto described in the literature require complex multi-step manufacturing techniques unsuited to the mass production of articles for e.g. the automotive market.

Therefore, it is an object of the invention to provide polyamide materials, in particular thermoplastic polyamide materials, for lightweight structural applications and/or metal replacement, in particular in the automotive industry, with good mechanical properties. It is another object of the invention to provide polyamide materials that contain fibrillar polyamide particles, in particular highly fibrillated high tenacity polyamide fibers. It is a further object of the invention that the fibrillar polyamide particles, in particular the highly fibrillated high tenacity polyamide fibers, are highly dispersed in the polyamide matrix. Another object of the invention is to provide polyamide materials containing fibrillar polyamide particles with a good compatibilization and/or a good connection between the fibrillar polyamide particles and the polyamide matrix, in particular wherein there are covalent bonds between the fibrillar polyamide particles, for example polyamide fibrils and/or polyamide fibers, and the matrix polyamide. It is a further object of the invention to provide isotropic polyamide materials with good stiffness, strength, heat resistance, and/or processing characteristics, but at the same time good ductility and/or impact resistance. It is another object of the invention to provide a process for the manufacture of the polyamide material according to the invention that contains few steps and/or is economic.

By using the present invention, some or all of the difficulties and drawbacks of the prior art can be overcome. In particular, some or all of the difficulties and drawbacks of the prior art can be overcome by the polyamide material of claim 1, the method of claim 15, the polyamide material of claim 23, the use of the polyamide material of claim 24, and the molded parts, fibers or foils containing the polyamide material of claim 25.
- Fig. 1: shows a 250 nm thick microtomed section from a polyamide material according to the invention.
- Fig. 2: shows graphs of the mechanical properties of a polyamide material according to the invention.
- Fig. 3: shows (a) a schematic of the potential structure of exemplary aromatic polyamide (aramid) fibers, (b) a presumed schematic of the polyamide material according to the present invention, and (c) a presumed schematic of a close-up view of the matrix-fiber and/or matrix-fibril interface.

The present invention preferably provides a self-reinforced polyamide, in particular a copolyamide, that includes well dispersed and highly fibrillated high tenacity polyamide inclusions covalently linked to a thermoplastic polyamide matrix, in particular a copolyamide containing a high volume fraction of high tenacity polyamide fibrils with a cross-section with a smaller area and/or a smaller diameter than the polyamide fibers used for the preparation of the copolyamide, which are covalently linked to a polyamide matrix, more particularly by reactive extrusion of short high tenacity polyamide fibers with selected thermoplastic aliphatic and/or semiaromatic polyamides. In particular, embodiments of the self-reinforced copolyamides include their composites with non-fibrillated short organic or inorganic fiber reinforcements.

Further embodiments are described in the dependent claims and will be described in the following.

Preferably, embodiments of the present invention relate to self-reinforced copolyamide composites containing highly fibrillated high tenacity polyamide inclusions covalently linked to a polyamide matrix, in particular to self-reinforced copolyamide composites containing a high volume fraction of high tenacity polyamide fibrils with a cross-section with a smaller area and/or a smaller diameter than the polyamide fibers used for the preparation of the polyamide material, which are covalently linked to a polyamide matrix. Particularly, in one or more embodiments, the composites comprise highly fibrillated high tenacity polyamide inclusions covalently linked to a polyamide matrix combined with non-fibrillated organic or inorganic short fiber reinforcements, more particularly the composites comprise a high volume fraction of high tenacity polyamide fibrils with a cross-section with a smaller area and/or a smaller diameter than the polyamide fibers used for the preparation of the composite, which are covalently linked to a polyamide matrix, combined with non-fibrillated organic or inorganic short fiber reinforcements.

The invention provides for a polyamide material containing a polyamide as the matrix polyamide and fibrillar polyamide particles, wherein at least 10 vol.% of the fibrillar polyamide particles, based on the total volume of the fibrillar polyamide particles, have a diameter of 5 to 1000 nm, and wherein the polyamide molecules that make up the surface of the fibrillar polyamide particles are connected with the matrix polyamide by covalent bonds.

It has surprisingly been found that some or all of the difficulties and drawbacks of the prior art can be overcome with the present invention. In particular, as a result of the unique combination of a matrix polyamide with fibrillar polyamide particles, wherein at least 10 vol.% of the fibrillar polyamide particles have a diameter of 5 to 1000 nm, and wherein the polyamide molecules that make up the surface of the fibrillar polyamide particles are connected with the matrix polyamide by covalent bonds, a good dispersion of the fibrillar polyamide particles in the matrix polyamide as well as a high compatibility between the matrix polyamide and the fibrillar polyamide particles can be achieved.

The good dispersion as well as the high compatibility in the polyamide material according to the invention are unexpectedly achieved by the method of the invention. Accordingly, by conducting the mixing of a matrix polyamide and a fibrous polyamide material at a temperature of at least 240°C for at least 2 minutes and at most 60 minutes, the fibrous polyamide material, for example polyamide fibers, in particular high tenacity short polyamide fibers, exemplified by aramid fibers, in particular chopped aramid fibers, is fibrillated *in situ* during the mixing, in particular during the extrusion compounding, of the matrix polyamide and the fibrous polyamide material. In this way, the difficulties normally associated with the direct dispersion of fibrous polyamide material and/or fibrillar polyamide particles, in particular of aramid pulp, in a polymer matrix are avoided according to the present invention. It was unexpectedly discovered that in particular high temperature reactive extrusion compounding of chopped high performance high tenacity polyamide and/or preferably aromatic polyamide (aramid) fibers in the presence of aliphatic and/or semiaromatic polyamides can result in the formation of a network of well dispersed, high tenacity polyamide fibrils or fibril bundles that are covalently bonded to the polyamide matrix. Without wishing to be bound by scientific theory, this previously unreported effect is attributed to rapid transamidation reactions between the matrix and disordered regions of the polyamide fibers exposed during and as a result of *in situ* fibrillation in the melt. Covalent bonding between the fibrillated polyamide fibers and the polyamide matrix is established already after short compounding times and results in a strong fiber-matrix interface, providing a significant increase in stiffness and tensile strength compared with the values measured for the unmodified matrix.

Without wishing to be bound by scientific theory, it is believed that the fibrillation of the fibrous polyamide material, in particular of high tenacity short polyamide fibers, exemplified by chopped aramid fibers, is caused by the shearing forces that occur during the mixing. In this way, some or all of the constituting particles of the fibrous polyamide material provided in the method according to the invention are split into polyamide particles with a cross-section with a smaller area and/or a smaller diameter than the original fibrous polyamide material, in particular than the constituting particles of the original fibrous polyamide material, in particular of the polyamide fibers. Thus, for example, some or all of the polyamide fibers provided in the method according to the invention may be split into polyamide particles with a cross-section with a smaller area and/or a smaller diameter than the polyamide fibers prior to mixing. The polyamide particles with a cross-section with a smaller area and/or a smaller diameter than the original fibrous polyamide material may in particular be a part of the fibrillar polyamide particles. Examples for polyamide particles with a cross-section with a smaller area and/or a smaller diameter than the fibrous polyamide material prior to mixing are fibrils and bundles of fibrils. By the fibrillation of the fibrous polyamide material in the method according to the invention, an improved reinforcement is achieved, because the number of fibrillar polyamide particles in the matrix polyamide is increased. Moreover, they are better distributed, in particular better dispersed, in the matrix polyamide.

Without wishing to be bound by scientific theory, it is further believed that in addition to the fibrillation of the fibrous polyamide material, the interface between the fibrillar polyamide particles emerging in the method according to the invention and the matrix polyamide is improved. In particular, the interface between the fibrillar polyamide particles emerging in the method according to the invention and the matrix polyamide is reactively compatibilized as some or all of the constituting particles of the fibrous polyamide material is split up into polyamide particles with a cross-section with a smaller area and/or a smaller diameter than the fibrous polyamide material, which may in particular be a part of the fibrillar polyamide particles. More particularly, the matrix-fiber interface is reactively compatibilized as the fibers break up to form particles with a cross-section with a smaller area and/or a smaller diameter. Chemical reactions, in particular transamidation reactions, occur in polyamides at sufficiently high temperatures. Such high temperatures are preferably applied in the method according to the invention, in particular during the mixing, more particularly during the melt extrusion. These reactions are known to result in rapid exchange of polyamide sequences, as is known from simple polyamide blends (see J. Cretenoud, S. Galland, C.J.G. Plummer, V. Michaud, A. Bayer, N. Lamberts, B. Hoffmann, H. Frauenrath, J. Appl. Polym. Sci. 2017,134, 44349) but has hitherto never been described for mixtures of fibrillar polyamide particles, in particular aramid fibers or fibrillated aramid fibers, in a matrix polyamide.

Without wishing to be bound by scientific theory, it is believed that in the method according to the invention, the interface between the fibrillar polyamide particles emerging in the method according to the invention is compatibilized by covalent bond formation across the interface between the fibrillar polyamide particles and the matrix polyamide, in particular by covalent bond formation between the polyamide molecules that make up the surface of the fibrillar polyamide particles emerging in the method according to the invention and the matrix polyamide. More particularly, it is believed that in the framework of the present invention, transamidation reactions lead to covalent bond formation across the fiber-matrix interface, which takes place as the fibrils are created. Due to the formation of covalent bonds between the polyamide molecules that make up the surface of the fibrillar polyamide particles and the matrix polyamide, the dispersion of the fibrillar polyamide particles, in particular of the fibrils, in the polyamide matrix, in particular in the thermoplastic polyamide matrix, is stabilized.

In the method according to the invention, organic fibers, in particular polyamide fibers, more particularly aramid fibers, may be directly used without a pretreatment such as an additional step of converting the fibers, into a pulp. Thus, with the present invention, the problems with extrusion compounding of organic fiber pulps prepared by a prior milling operation that are well known from the state of the art may be avoided. Moreover, the resulting polyamide material has good mechanical properties, in particular a good tensile strength, stiffness, and/or ductility. For example, a significant improvement in the tensile strength and ductility of chopped polyamide fiber-reinforced aliphatic or semiaromatic polyamides or their blends was observed with increasing residence times in the extruder and hence increasing fibrillation of the polyamide fiber, but without significant losses in stiffness. Moreover, the storage modulus E' of a mixture of a fibrous polyamide material and a polyamide matrix that was premixed at 300°C for 5 minutes, increased at 300°C in the absence of further mixing over a period of minutes to hours as evidenced by dynamic mechanical analysis (DMA). Without wishing to be bound by scientific theory, this change of properties with residence time, in particular in the extruder, is attributed to transamidation reactions between the surface of the fibrillar polyamide particles and the polyamide matrix. By contrast, it was for example observed that in the absence of the fibrous polyamide material, the mechanical properties of the aliphatic and semiaromatic polyamides and their blends do not change significantly with residence time under the same compounding conditions.

Moreover, it was unexpectedly observed that the method according to the invention is also particularly suitable for the preparation of composites, in particular of hybrid composites. Polyamide materials according to the invention that contain one or more additional additives may also be called composites, in particular hybrid composites. Without wishing to be bound by theory, the improvement observed for composites, in particular for hybrid composites, using the method of the invention are attributed to the improvements concerning the dispersion and the compatibility of the fibrillar polyamide particles, in particular the polyamide or aramid fibers and/or the fibrillated polyamide or aramid fibers, and the matrix polyamide. For example, remarkable improvements in the properties of extrusion-compounded hybrid short aramid-glass fiber-reinforced polyamide composites were observed, where substitution of part of the glass fibers by an equivalent volume of fibrillated aramid fiber covalently bonded to the matrix results not only in reduced density, but also an increase in specific tensile strength of up to 20 % while maintaining the specific stiffness and ductility. This corresponds to an increase in tensile fracture energy by 10 to 20 % with respect to the polyamide containing glass fibers as reinforcement but without fibrillated aramid fibers. Improvements in the tensile fracture energy of glass fiber-reinforced polyamides of this order of magnitude are considered to be highly significant in the automotive industry.

By intensive research efforts, it has been discovered by the inventors that the formation of the covalent bonds in the method according to the invention begins at a mixing time of two minutes at a temperature of 240°C. Longer mixing times and/or a higher mixing temperature promote the formation of a greater number of covalent bonds thereby improving the compatibility of the fibrillar polyamide particles with the matrix polyamide and/or the mechanical properties of the resulting polyamide material. However, the inventors also discovered that the properties of the resulting polyamide material deteriorate when the mixing times are too long, in particular longer than 60 minutes. The deterioration of the properties of the resulting polyamide material at long mixing times was particularly apparent when additional reinforcing agents such as glass fibers were added.

The present invention implies important advantages with respect to the state of the art. For example, if the fibrillar polyamide particles, in particular the fibrillated polyamide fibers and/or the polyamide fibers, are sufficiently well dispersed, optimum combinations of properties may be established at contents of the fibrillar polyamide particles, in particular the polyamide fibers, more particularly the fibrillated polyamide fibers and/or the polyamide fibers, of only a few wt.% in the final material, thus avoiding the high costs associated with the use of high volume fractions of conventional aramid fiber reinforcements, for example. Moreover, the invention depends on existing base materials and hence avoids the high costs associated with the conventional development of polyamides and requires no significant additional investment in production equipment and other infrastructure.

Fibrillar polyamide particles according to the invention particularly comprise one or more polyamides. In particular, they may consist of one or more polyamides, more particularly, they may consist of one polyamide. Moreover, fibrillar polyamide particles according to the invention may have a cross-section and extend substantially perpendicularly to the cross-section. Fibrillar polyamide particles according to the invention may have a long axis along the extension perpendicular to the cross-section. The cross-section may have for example a substantially circular, circular, elliptical, irregular, or polygonal shape. Fibrillar polyamide particles may have an aspect ratio, defined as the length of the particle divided by the diameter of the cross-section of the particle that is greater than 1:1, in particular greater or equal to 10:1. Examples for fibrillar polyamide particles are polyamide fibrils, bundles of polyamide fibrils, fibrillated polyamide fibers, and/or polyamide fibers. Fibrillar polyamide particles may be obtained by fibrillation of fibrous polyamide material, for example by fibrillation of polyamide fibers. In particular, fibrillar polyamide particles may comprise or consist of partly or completely fibrillated fibrous polyamide material, more particularly of partly or completely fibrillated polyamide fibers. Even more particularly, fibrillar polyamide particles may comprise or consist of partly or completely fibrillated fibrous polyamide material that was fibrillated in the process according to the invention, more particularly of partly or completely fibrillated polyamide fibers that were fibrillated in the process according to the invention. Accordingly, fibrillar polyamide particles may comprise polyamide fibrils, bundles of polyamide fibrils, and/or polyamide fibers, in particular polyamide fibrils, bundles of polyamide fibrils, and polyamide fibers.

Fibrils, more particularly polyamide fibrils, may in particular refer to the smallest particles, more particularly the smallest polyamide particles, into which a fiber, more particularly polyamide fibers, can be split up, wherein a fibril, more particularly a polyamide fibril, contains more than one polymer chain, more particularly more than one polyamide polymer chain. Fibrils, more particularly polyamide fibrils may have a cross-section and extend substantially perpendicularly to the cross-section. Fibrils, more particularly polyamide fibrils, may have a long axis along the extension perpendicular to the cross-section. The cross-section may have for example a substantially circular, circular, elliptical, irregular, or polygonal shape. Fibrils, more particularly polyamide fibrils, may in particular contain a crystalline phase that contains more than one polyamide polymer chains, wherein in the crystalline phase, the mean angle between the polyamide polymer chains and the long axis of the fibril, more particularly the polyamide fibril, is at most 30°, in particular at most 20°, or at most 15°, or at most 12°. Bundles of fibrils, more particularly bundles of polyamide fibrils, comprise at least two fibrils, more particularly at least two polyamide fibrils.

Fibrous polyamide material according to the invention may comprise one or more polyamides. In particular, the fibrous polyamide material may consist of one or more polyamides, more particularly, it may consist of one polyamide. Examples of a fibrous polyamide material are polyamide fibers, in particular aramid fibers. In the case of polyamide fibers and/or aramid fibers, the indivual polyamide and/or aramid fibers may particularly be the constituting particles of the fibrous material. The constituting particles of the fibrous polyamide material may have a cross-section and extend substantially perpendicularly to the cross-section. The constituting particles of the fibrous polyamide material according to the invention may have a long axis along the extension perpendicular to the cross-section. The cross-section may have for example a substantially circular, circular, elliptical, irregular, or polygonal shape. The constituting particles of the fibrous polyamide material may have an aspect ratio, defined as the length of the particle divided by the diameter of the cross-section of the particle that is greater than 1:1, in particular greater or equal to 10:1. In particular, the diameter of the cross-section of the constituting particles of the fibrous polyamide material according to the invention may be equal to or greater than the diameter of the cross-section of the fibrillar polyamide particles according to the invention.

Fibrillation may in particular mean the processing of solid fibrous material, in particular solid fibers, in a manner that splits some or all of the constituting particles of the fibrous material, for example the fibers, into particles with a cross-section with a smaller area and/or a smaller diameter than the constituting particles of the fibrous material, for example into fibrils and/or bundles of fibrils, which remain solid. Thus, fibrillation of fibrous polyamide material may in particular mean the splitting of some or all of the constituting particles of the fibrous polyamide material, for example the polyamide fibers, into polyamide particles with a cross-section with a smaller area and/or a smaller diameter than the constituting particles of the fibrous polyamide material, for example into polyamide fibrils or bundles of polyamide fibrils. However, fibrillation may not be complete such that some of the constituting particles of the fibrous material may not be split up into particles with a cross-section with a smaller area and/or a smaller diameter. Preferably, the fibrillated fibrous polyamide material, in particular the fibrillated polyamide fibers, described in the present invention is characterized by a degree of fibrillation of at least about 10 vol.%, or at least about 20 vol.%, or at least about 30 vol.%, or at least 40 vol.%, or at least 50 vol.% or at least 60 vol.% or at least 70 vol.% or at least 80 vol.% or at least 90 vol.% or at least 95 vol.% or at least 99 vol.%, in each case based on the volume of the fibrous polyamide material before fibrillation, in particular of the polyamide fibers before fibrillation, and a maximum of 100 vol.%, based on the volume of the fibrous polyamide material before fibrillation, in particular of the polyamide fibers before fibrillation. A degree of fibrillation of the fibrillated fibrous polyamide material of, for example, at least 30 vol.%, based on the volume of the fibrous polyamide material before fibrillation, particularly means that the fibrillated fibrous polyamide material contains at least 30 vol.% of polyamide particles with a cross-section with a smaller area and/or a diameter that is smaller than those of the constituting particles of the fibrous polyamide material before fibrillation. A degree of fibrillation of the fibrillated fibrous polyamide material of 100 vol.% particularly means that no constituting particles of the fibrous polyamide material, in particular no polyamide fibers, with cross-sectional areas and/or diameters identical to or comparable with the cross-sectional area and/or diameter prior to fibrillation remain in the final compound, in particular in the fibrillated fibrous polyamide material. In particular, when the degree of fibrillation of the fibrous polyamide material, in particular of the polyamide fibers, is 100 vol.%, based on the volume of the fibrous polyamide material before fibrillation, in particular of the polyamide fibers before fibrillation, the fibrous polyamide material, in particular the polyamide fibers, may be called completely fibrillated. When the degree of fibrillation of the fibrous polyamide material, in particular of the polyamide fibers, is less than 100 vol.%, based on the volume of the fibrous polyamide material before fibrillation, in particular of the polyamide fibers, the fibrous polyamide material, in particular the polyamide fibers, may be called partly fibrillated. In particular, in the polyamide material according to the invention, both the unfibrillated fibrous polyamide material and the fibrillated fibrous polyamide material may form the fibrillar polyamide particles.

The diameter of the fibrillar polyamide particles and/or the constituting particles of the fibrous polyamide material is particularly the diameter of the cross-section of the fibrillar polyamide particles and/or the constituting particles of the fibrous polyamide material. The diameter, in particular of the cross-section and/or the fibrillar polyamide particles and/or the constituting particles of the fibrous polyamide material, is determined by determining the diameter of the "equivalent circle". The equivalent circle is the circle that has the same area as the cross-section of, for example the fibrillar polyamide particle or the constituting particle of the fibrous polyamide material, in question. The cross-section particularly refers to the cross-section that is substantially perpendicular, more particularly perpendicular, to the long axis of the fibrillar polyamide particle and/or the constituting particle of the fibrous polyamide material. For example, for a circular cross-section, the equivalent circle is identical to the cross-section. For cross-sections with other shapes, such as substantially circular, elliptical, irregular, or polygonal cross-sections, the area of the cross-section in question is determined in a first step. The circle with the same area as the cross-section, which is the equivalent circle, is determined in the second step. For the determination of the diameter, the diameter of the equivalent circle is then determined in a third step.

Different techniques can be employed in the determination of the diameter, in particular of the diameter of the cross-section. In particular, imaging methods, such as microscopy, for example optical microscopy and electron microscopy, in particular electron microscopy, more particularly, transmission electron microscopy, may be employed. When using microscopic methods, the diameter, in particular the diameter of the cross-section and/or the fibrillar polyamide particles and/or the constituting particles of the fibrous polyamide material, may be determined, for example by taking micrographs of one or more slices of the polyamide material. From these micrographs, the diameter can then be determined using the equivalent circle as described above.

When determining the diameter using slices, for example by transmission electron microscopy, the skilled person can check whether the cross-section of, for example, the fibrillar polyamide particle and/or the constituting particle of the fibrous polyamide material in the slice is at a right angle to the long axis of, for example, the fibrillar polyamide particle and/or the constituting particle of the fibrous polyamide material, by checking the edges of the cross-section in the slice. In case the cross-section in the slice is not substantially perpendicular or perpendicular to the long axis of, for example, the fibrillar polyamide particle and/or the constituting particle of the fibrous polyamide material, that is, the cross-section is tilted, the edges of the cross-section in the slice that are parallel to the tilt axis will show a gradient in contrast. Moreover, the skilled person can check the orientation of the cross-section in the slice with respect to the long axis of, for example, the fibrillar polyamide particle and/or the constituting particle of the fibrous polyamide material, in transmission electron microscopy by tilting the slice with the aid of the transmission electron microscopy sample holder and reconstructing the three-dimensional geometry of the section from series of images taken at different tilt angles of the slice.

In addition, tomographic imaging, for example, X-ray computed tomography, may be used for the determination of the equivalent circle and/or the diameter, in particular of the cross-section and/or the fibrillar polyamide particles and/or the constituting particles of the fibrous polyamide material. From the data from tomographic imaging, the diameter, in particular the diameter of the equivalent circle, can be determined by calculating the volume of the fibrillar polyamide particle or the constituting particle of the fibrous polyamide material in question in a first step. In a second step, a cylinder can be determined that has the same volume as the fibrillar polyamide particle and/or the constituting particle of the fibrous polyamide material, which is the equivalent cylinder. In a third step, the cross-section of this cylinder, which is an equivalent circle, can be determined. For the determination of the diameter, the diameter of the equivalent circle is then determined in a third step.

Preferably, the diameter, in particular the diameter of the cross-section and/or the fibrillar polyamide particles and/or the constituting particles of the fibrous polyamide material, is determined using transmission electron microscopy.

A fiber-reinforced material according to the invention may contain fibers and/or fibrils and/or bundles of fibrils. In particular, the reinforcement of the fiber-reinforced material may result from fibers and/or from fibrils and/or from bundles of fibrils, for example from partly or completely fibrillated fibers. A self-reinforced material according to the invention may contain fibers and/or fibrils and/or bundles of fibrils, wherein the material that makes up the fiber and/or fibril and/or bundle of fibrils is the same or chemically very similar to the matrix material, for example polyamide fibers in a matrix polyamide. In particular, the reinforcement of the self-reinforced material may result from fibers and/or from fibrils and/or from bundles of fibrils, for example from partly or completely fibrillated fibers, wherein the material that makes up the fiber and/or fibril and/or the bundle of fibrils is the same or chemically very similar to the matrix material, for example polyamide fibers in a matrix polyamide.

According to an embodiment of the invention, the polyamide material is a reinforced polyamide material, in particular a self-reinforced polyamide material.

According to the invention, the polyamide material contains fibrillar polyamide particles wherein at least 10 vol.% of the fibrillar polyamide particles, based on the total volume of the fibrillar polyamide particles, have a diameter of 5 to 1000 nm. It was discovered, that even better mechanical properties of the polyamide material could be achieved when a larger fraction of the fibrillar polyamide particles of the invention had a diameter as mentioned above or even a diameter in a smaller range. Therefore, according to an embodiment of the invention, at least 20 vol.%, in particular at least 30 vol.%, or at least 40 vol.%, or at least 50 vol.%, or at least 60 vol.%, or at least 70 vol.%, or at least 80 vol.%, or at least 90 vol.%, or at least 95 vol.%, or at least 99 vol.%, of the fibrillar polyamide particles, based on the total volume of the fibrillar polyamide particles, has a diameter of 5 nm to 1000 nm, in particular 5 nm to 900 nm, or 5 nm to 800 nm, or 5 nm to 700 nm, or 5 nm to 600 m, or 5 nm to 400 nm, or 5 nm to 400 nm, or 5 nm to 300 nm, or 5 nm to 200 nm, or 5 nm to 100 nm, or 5 nm to 75 nm, or 5 nm to 50 nm. The diameters of the individual fibrillar polyamide particles may all be the same or may vary within the ranges mentioned above. Thus, the individual fibrillar polyamide particles may all have a diameter of, for example 100 nm, or they may have varying diameters within the ranges mentioned above.

According to an embodiment of the invention, at least 20 vol.% of the fibrillar polyamide particles, based on the total volume of the fibrillar polyamide particles, have a diameter of 5 nm to 1000 nm, in particular 5 nm to 500 nm.

According to another embodiment of the invention, at least 30 vol.% of the fibrillar polyamide particles, based on the total volume of the fibrillar polyamide particles, have a diameter of 5 nm to 1000 nm, in particular 5 nm to 500 nm.

According to an embodiment of the invention, the fibrillar polyamide particles may also comprise polyamide fibers, wherein the diameter of the polyamide fibers is particularly the same as the diameter of the constituting particles of the fibrous polyamide material before the mixing of the fibrous polyamide material with the matrix polyamide. However, it is preferred that all of the constituting particles of the fibrous polyamide material are split into fibrillar polyamide particles with a smaller diameter than the constituting particles of the fibrous polyamide material before the mixing, in particular with a diameter of 5 nm to 1000 nm, more particularly 5 nm to 500 nm.

While in principle both long and short fibrillar polyamide particles may be used according to the invention, it was found to be advantageous when the fibrillar polyamide particles have an aspect ratio, defined as the length of an individual fibrillar polyamide particle divided by its diameter, of from 10:1 to 4000000:1, in particular from 20:1 to 2000000:1, or from 40:1 to 1000000:1, or from 100:1 to 1000000:1. In addition the fibrillar polyamide particles preferably have a length of from 50 nm to 2 cm, in particular from 100 nm to 1 cm, or from 500 nm to 5 mm. Fibrillar polyamide particles with a length of from 50 nm to 2 cm are advantageous because they can be distributed in an isotropic fashion in the matrix polyamide more easily than longer fibers resulting in a polyamide material the mechanical properties of which are independent of its orientation. However, below a length of 50 nm, the reinforcing effect of the fibers decreases. Similarly, the fibrillar polyamide particles with an aspect ratio of from 10:1 to 4000000:1 are advantageous because they are distributed in an isotropic fashion in the matrix polyamide more easily than fibrillar polyamide particles with a larger aspect ratio resulting in a polyamide material with substantially isotropic mechanical properties. Moreover, it was found that dispersions of fibrillar polyamide particles with an aspect ratio of from 10:1 to 4000000:1 are particularly stable in the matrix material thereby yielding a substantially homogeneous distribution resulting in a well-reinforced material. However, at aspect ratios of less than 10:1, the reinforcing effect of the fibers decreases.

According to an embodiment of the invention, the fibrillar polyamide particles are substantially crystalline. In particular, the fibrillar polyamide particles contain a substantially crystalline core and an amorphous sheath. According to a preferred embodiment, the fibrillar polyamide particles contain a crystalline phase that contains more than one polyamide polymer chains, wherein in the crystalline phase, the mean angle between the polyamide polymer chains and the long axis of the fibrillar polyamide particles is at most 30°, in particular at most 20°, or at most 15°, or at most 12°. In particular, this crystalline phase may be contained in the substantially crystalline core of the fibrillar polyamide particles. More particularly, the substantially crystalline core of the fibrillar polyamide particles may consist of this crystalline phase. In the amorphous sheath that the fibrillar polyamide particles may contain, the polyamide molecules that make up the amorphous sheath are preferably not oriented. Polyamide materials containing substantially crystalline fibrillar polyamide particles as described above showed good mechanical properties, in particular a good strength.

The fibrillar polyamide particles according to the invention particularly comprise one or more polyamides. Preferably, the fibrillar polyamide particles consist of one polyamide. Different polyamides can be employed as polyamide constituting the fibrillar polyamide particles. In particular, the polyamide may be a polyamide with from 1 to 20, more particularly from 1 to 15 or from 1 to 10, carbon atoms between two consecutive amide linkages. In addition, the backbone and/or the side chains of the polyamide may contain from 1 to 10 heteroatoms in between two consecutive amide linkages, in particular nitrogen, sulfur or oxygen. The polyamide constituting the fibrillar polyamide particles may be a copolymer or a homopolymer. In the case of a copolymer, the number of carbon atoms and/or heteroatoms between two consecutive amide linkages may vary, in particular the number of carbon atoms and/or heteroatoms between two consecutive amide linkages may vary periodically or blockwise. The polyamide constituting the fibrillar polyamide particle may have a number-average molecular weight from 3000 to 3000000 g/mol, particularly from 10000 to 1000000 g/mol or from 10000 to 300000 g/mol or from 20000 to 200000 g/mol or from 30000 to 150000 g/mol or from 35000 to 100000 g/mol.

The melting point of the polyamide constituting the fibrillar polyamide particles may vary in a wide range. Preferably, the polyamide constituting the fibrillar polyamide particles has a higher melting point than the matrix polyamide or all of the matrix polyamides in the case of blends. If the fibrillar polyamide particles comprise more than one polyamide, preferably all of the polyamides have a higher melting point than the matrix polyamide or all of the matrix polyamides in the case of blends. If the matrix polyamide is amorphous, the melting point of the polyamide constituting the fibrillar polyamide particles is preferably higher than the glass transition temperature (Tg) of the amorphous polyamide or the amorphous polyamides of the matrix polyamide. In this way, the fibrillar polyamide particles withstand the temperatures of the method according to the invention thereby yielding a polyamide material with good mechanical properties.

The polyamide constituting the fibrillar polyamide particles may be aromatic or semiaromatic. An aromatic polyamide is a polyamide in which at least 85%, in particular at least 90%, more particularly at least 95%, even more particularly at least 98%, or at least 99% of the amide linkages are directly attached to two substituted or unsubstituted aromatic moieties, in particular to two substituted or unsubstituted phenylene moieties. Aromatic polyamides are also called aramids. Aramids comprise meta-aramids and para-aramids, such as poly(meta-phenylene terephthalamide) and poly(para-phenylene terephthalamide) as for example described in US 5 830 395 A. Preferably, the polyamide constituting the fibrillar polyamide particles is an aramid. Fibrillar polyamide particles in which the constituting polyamide is an aramid have been found to be particularly beneficial due to their high tenacity and the fact that their melting points are typically above the melting point of many polymer matrix materials. It was found that fibrillar polyamide particles in which the constituting polyamide was an aramid resulted in polyamide materials with good mechanical properties.

A semiaromatic polyamide is a polyamide in which each amide linkage of the polyamide is directly attached to one aromatic and one non-aromatic, in particular one aliphatic, moiety. Preferred semiaromatic polyamides are semiaromatic polyamides of the type PAnT, wherein T designates a terephthalic acid residue and n designates the number of carbon atoms in the aliphatic segment, for example poly(hexamethylene terephthalamide) (PA6T), wherein n is 6, poly(nonamethylene terephthalamide) (PA9T), wherein n is 9, or poly(decamethylene terephthalamide) (PA10T), wherein n is 10.

Preferably, the polyamide constituting the fibrillar polyamide particles is selected from the group consisting of semiaromatic polyamides of the type PAnT, wherein T designates a terephthalic acid residue and n designates the number of carbon atoms in the aliphatic segment, poly(p-phenylene terephthalamide) (PPTA), poly(m-phenylene isophthalamide) (MPDI), poly(p-phenylene-*co*-3,4'-diphenyl ether terephthalamide) (ODA-PPTA copolymer), poly(5-amino-2(p-aminophenyl) benzimadole terephthalamide) (SVM), poly(4-methyl-m-phenylene terephthalamide) (4M-MPTA), poly(p-aminobenzoic acid), poly(hexamethylene terephthalamide) (PA6T), poly(nonamethylene terephthalamide) (PA9T), poly(decamethylene terephthalamide) (PA10T), and poly(dodecamethylene terephthalamide) (PA12T). More preferably, the polyamide constituting the fibrillar polyamide particles is selected from the group consisting of poly(p-phenylene terephthalamide) (PPTA), poly(m-phenylene isophthalamide) (MPDI), poly(p-aminobenzoic acid), and poly(hexamethylene terephthalamide) (PA6T). It was found that fibrillar polyamide particles, in which the constituting polyamide was one of the aforementioned polyamides help to achieve polyamide materials with good mechanical properties.

According to the invention, the polyamide molecules that make up the surface of the fibrillar polyamide particles are connected with the matrix polyamide by covalent bonds. Preferably, as explained above, the covalent bond between the polyamide molecules that make up the surface of the fibrillar polyamide particles is formed presumably as a result of the method according to the invention. Advantageously, the polyamide molecules that make up the surface of the fibrillar polyamide particles are a part of the fibrillar polyamide particles. In particular, the polyamide molecules that make up the surface of the fibrillar polyamide particles may be part of an amorphous sheath surrounding a substantially crystalline core. According to an embodiment of the invention, the covalent bonds between the polyamide molecules that make up the surface of the fibrillar polyamide particles with the matrix polyamide are formed by formation of a copolymer between the polyamide molecules that make up the surface of the fibrillar polyamide particles with the matrix polyamide. Preferably, the covalent bonds between the polyamide molecules that make up the surface of the fibrillar polyamide particles with the matrix polyamide are amide bonds. It was found that covalent bonds between the polyamide molecules that make up the surface of the fibrillar polyamide particles and the matrix polyamide helped to stabilize the dispersion of the fibrillar polyamide particles in the matrix polyamide. This resulted in a polyamide material with good and/or isotropic mechanical properties.

The fibrillar polyamide particles can be present in the polyamide material according to the invention in varying amounts. Advantageously, the polyamide material contains the fibrillar polyamide particles in an amount from 1 to 60 vol.%, in particular from 5 to 60 vol.%, or from 10 to 60 vol.%, or from 15 to 60 vol.% or from 20 to 60 vol.%, based on the total volume of the polyamide material. In these amounts, a good reinforcement of the polyamide material can be achieved resulting in a polyamide material with good mechanical properties.

Different polyamides can be used as the matrix polyamide. For example, in the present invention, any matrix polyamide comprising or consisting of a thermoplastic polyamide, miscible or immiscible blends of different polyamides, or miscible or immiscible blends of thermoplastic polyamides with other classes of polymer and/or non-polymeric inorganic or organic fillers or other additives, such as rubber tougheners, flame retardants, processing aids, stabilizers or pigments may be used. Polyamides are particularly polymers that contain repeating amide (-CO-NH-) linkages. Proteins are examples of naturally occurring polyamides. The best known synthetic polyamides are aliphatic polyamides, which are often called "nylons". Nylons may also contain aromatic moieties. In this case, however, the polyamide may be called a nylon in particular if fewer than 85% of the amide groups are linked directly to two aromatic moieties.

Preferably, the matrix polyamide is a thermoplastic polyamide, more preferably an amorphous thermoplastic polyamide or a semicrystalline thermoplastic polyamide. The matrix polyamide may also be an amorphous semiaromatic polyamide or a mixture of amorphous semiaromatic polyamides. The matrix polyamide may be a homopolymer or a copolymer of different polyamides. The matrix polyamide may also be a copolymer of a polyamide with a polyester or a polyether. According to an embodiment of the invention, the matrix polyamide is an aliphatic or a semiaromatic polyamide.

Further, the matrix polyamide may be a blend of different polymers. In particular, the matrix polyamide may be a blend of different polyamides, wherein the polyamides are homopolymers, copolymers, and/or copolymers of a polyamide with a polyester and/or a polyether. Moreover, the matrix polyamide may also be a blend of different polyamides, in particular, the matrix polyamide may be a miscible or immiscible blend of different polyamides.

Preferably, the matrix polyamide is a polyamide with from 1 to 20, more particularly from 1 to 15 or from 1 to 10, carbon atoms between two consecutive amide linkages. In addition, the backbone and/or the side chains of the matrix polyamide may contain from 1 to 10 heteroatoms in between two consecutive amide linkages, in particular nitrogen, sulfur or oxygen. In the case of a copolymer, the number of carbon atoms and/or heteroatoms between two consecutive amide linkages in the matrix polyamide may vary, in particular the number of carbon atoms and/or heteroatoms between two consecutive amide linkages may vary periodically or blockwise. The matrix polyamide may have a number-average molecular weight from 3000 to 3000000 g/mol, particularly from 10000 to 1000000 g/mol or from 10000 to 300000 g/mol or from 20000 to 200000 g/mol or from 30000 to 150000 g/mol or from 35000 to 100000 g/mol. If the matrix polyamide is a blend of different polyamides, preferably all of the polyamides are as described above. Further, the melting point of the matrix polyamide is preferably lower than the melting point of the polyamide constituting the fibrillar polyamide particles. If the matrix polyamide is a blend of different polyamides, preferably all of the polyamides have a lower melting point than the polyamide constituting the fibrillar polyamide particles. If the matrix polyamide is amorphous, preferably, the glass transition temperature (Tg) of the amorphous polyamide or the amorphous polyamides of the matrix polyamide is preferably lower than the melting point of the polyamide constituting the fibrillar polyamide particles.

According to an embodiment of the invention, the matrix polyamide is selected from the group consisting of poly(epsilon-caprolactam) (PA6), poly(caprylolactam) (PA8), poly(decanolactam) (PA10), poly(undecanolactam) (PA11), poly(laurolactam) (PA12), poly(hexamethylene adipamide) (PA66), specialty polyamides such as poly(hexamethylene azeladiamide) (PA69), poly(hexamethylene sebacamide) (PA610), poly(hexamethylene dodecanoamide) (PA612), poly(tetramethylene adipamide) (PA46), poly(dodecamethylene adipamide) (PA126), poly(epsilon-caprolactam-co-hexamethylene adipamide) (PA6-PA66 copolymer), semi-aromatic polyamides such as poly(m-xylylene adipamide) (MXD6), poly(trimethylhexamethylene terephthalamide) (TMDT), bis(4-aminocyclohexyl)methane-terephthalic acid copolymer (PACMT), poly(hexamethylene isophthalamide) (PA6I), poly(hexamethylene isophthalamide-co-hexamethylene terephthalamide) (PA6I-PA6T copolymer), poly(hexamethylene terephthalamide-*co*-isophthalamide) (PA6TI), in particular from hexamethylene diamine with 70% terephthalic acid and 30% isophthalic acid, poly(hexamethylene terephthalamide-*c*o-2-methyl pentamethylene terephthalamide) (PA6T-PADT copolymer), poly(hexamethylene adipamide-*co*-hexamethylene terephthalamide) (PA66-PA6T copolymer), poly(epsilon-caprolactam-*co*-hexamethylene terephthalamide) (PA6-PA6T copolymer), copolymers of any of the aforementioned polymers, in particular copolymers of poly(hexamethylene terephthalamide-*co*-isophthalamide) (PA6TI) and poly(hexamethylene sebacamide) (PA610), copolymers of poly(hexamethylene terephthalamide-*co*-isophthalamide) (PA6TI) and poly(hexamethylene adipamide) (PA66), and copolymers of poly(hexamethylene terephthalamide) (PA6T) and poly(2-methyl pentamethylene terephthalamide) (PADT), segmented copolymers of any of the aforementioned polymers with polyesters or polyethers, and blends thereof, in particular blends of poly(epsilon-caprolactam) (PA6) and poly(hexamethylene adipamide) (PA66), blends of poly(hexamethylene terephthalamide-*co*-isophthalamide) (PA6TI) and poly(hexamethylene adipamide) (PA66), blends of poly(hexamethylene terephthalamide-*co*-isophthalamide) (PA6TI) and poly(hexamethylene sebacamide) (PA610), and blends of poly(hexamethylene terephthalamide) (PA6T) and poly(2-methyl pentamethylene terephthalamide) (PADT).

Preferably, the matrix polyamide is selected from the group consisting of poly(hexamethylene isophthalamide) (PA6I), poly(hexamethylene isophthalamide-*co-*hexamethylene terephthalamide) (PA6I-PA6T copolymer), poly(hexamethylene terephthalamide-*co*-isophthalamide) (PA6TI), in particular from hexamethylene diamine with 70% terephthalic acid and 30% isophthalic acid, poly(hexamethylene terephthalamide-*co*-2-methyl pentamethylene terephthalamide) (PA6T-PADT copolymer), poly(epsilon-caprolactam-*co*-hexamethylene adipamide) (PA6-PA66 copolymer), poly(hexamethylene adipamide-*co*-hexamethylene terephthalamide) (PA66-PA6T copolymer), poly(epsilon-caprolactam-*co*-hexamethylene terephthalamide) (PA6-PA6T copolymer), copolymers of poly(hexamethylene terephthalamide-*co*-isophthalamide) (PA6TI) and poly(hexamethylene sebacamide) (PA610), copolymers of poly(hexamethylene terephthalamide-*co*-isophthalamide) (PA6TI) and poly(hexamethylene adipamide) (PA66), and copolymers of poly(hexamethylene terephthalamide) (PA6T) and poly(2-methyl pentamethylene terephthalamide) (PADT), and blends thereof, in particular blends of poly(epsilon-caprolactam) (PA6) and poly(hexamethylene adipamide) (PA66), blends of poly(hexamethylene terephthalamide-*co*-isophthalamide) (PA6TI) and poly(hexamethylene adipamide) (PA66), blends of poly(hexamethylene terephthalamide-*co-*isophthalamide) (PA6TI) and poly(hexamethylene sebacamide) (PA610), and blends of poly(hexamethylene terephthalamide) (PA6T) and poly(2-methyl pentamethylene terephthalamide) (PADT).

For poly(hexamethylene terephthalamide-*co*-isophthalamide) (PA6TI), the proportions of terephthalic acid repeat units and the isophthalic acid repeats units may vary. In particular, the proportion of the isophthalic acid repeat units may be so large that the resulting poly(hexamethylene terephthalamide-*co*-isophthalamide) (PA6TI) is amorphous, for example 70% isophthalic acid repeat units and 30% terephthalic acid repeat units. Also, for copolymers of poly(hexamethylene terephthalamide) (PA6T) and poly(2-methyl pentamethylene terephthalamide) (PADT), the proportions of hexamethylene diamine repeat units and the 2-methyl pentamethylene diamine repeat units may vary. In particular, the proportion of the 2-methyl pentamethylene diamine repeat units may be so large that the resulting copolymer of poly(hexamethylene terephthalamide) (PA6T) and poly(2-methyl pentamethylene terephthalamide) (PADT) is amorphous, for example 70% 2-methyl pentamethylene diamine repeat units and 30% hexamethylene diamine repeat units.

Poly(hexamethylene isophthalamide-*co*-hexamethylene terephthalamide) (PA6I-PA6T copolymer) may, in particular, be referred to as poly(hexamethylene terephthalamide-*co*-isophthalamide) (PA6TI).

The polyamide material according to the invention may contain additional additives. Polyamide materials according to the invention that contain one or more additional additives may also be called composites, in particular hybrid composites. These additives may serve different purposes, for example increasing the flame retardancy or further increasing the mechanical properties. Thus, the polyamide material according to the invention may contain one or more additives selected from the group consisting of polymer and/or non-polymeric inorganic or organic fillers, rubber tougheners, flame retardants, processing aids, stabilizers, pigments, glass fibers, in particular E-glass fibers, S-glass fibers, S2-glass fibers, R-glass fibers, or C-glass fibers, natural fibers such as hemp, sisal or cellulose, carbon fibers, polyamide fibers, graphene, and mixtures thereof. In order to increase the mechanical properties, it was found to be advantageous when the polyamide material contains one or more additives selected from the group consisting of other polymers and/or non-polymeric inorganic or organic fillers, glass fibers, natural fibers such as hemp, sisal or cellulose, carbon fibers, polyamide fibers, graphene, and mixtures thereof. Preferred additives in the polyamide material are reinforcing additives, in particular reinforcing fibers, more particularly short reinforcing fibers, such as E-glass fibers, S-glass fibers, S2-glass fibers, R-glass fibers, C-glass fibers, carbon fibers, polyamide fibers, or mixtures thereof. The polyamide material may contain more than one reinforcing additive. For example, the polyamide material may contain glass fibers and/or polyamide fibers as additives. Preferably, the polyamide material contains carbon fibers, polyamide fibers, and/or glass fibers, in particular glass fibers with a tenacity of at least 3000 MPa at 23°C, more particularly with a tenacity of at least 3300 MPa at 23°C, even more particularly with a tenacity of 3400 MPa at 23°C. According to a preferred embodiment of the invention, the polyamide material contains polyamide fibers and/or carbon fibers and/or glass fibers selected from the group consisting of E-glass fibers, R-glass fibers, S-glass fibers, S2-glass fibers, C-glass fibers, and mixtures thereof.

Preferably, the additive is a non-fibrillated organic or inorganic fiber reinforcement, in particular a short organic or inorganic fiber reinforcement, preferably with a length of at most 10 cm, in particular at most 5 cm, or at most 2 cm, or at most 1 cm, or at most 5 mm, or at most 1 mm, or at most 0.5 mm or at most 0.3 mm. Examples for non-fibrillated organic fiber reinforcements are polyamide fibers. Examples for non-fibrillated inorganic fiber reinforcements are carbon fibers and glass fibers. Advantageously, the additive is a non-fibrillated organic or inorganic fiber reinforcement, in particular glass fibers, with a diameter of from 1 to 20 µm, in particular 3 to 18 µm. Preferably, the glass fibers are selected from the group consisting of E-glass fibers, R-glass fibers, S-glass fibers, S2-glass fibers, C-glass fibers, and mixtures thereof.

The polyamide fibers that may be used as additives are preferably added in such a way that they are substantially not fibrillated, in particular in such a way that they are not fibrillated. Examples for polyamide fibers that may be used as additives are chopped polyamide fibers or continuous polyamide fibers, wherein the term "continuous polyamide fiber" particularly refers to polyamide fibers that are significantly longer than at least one of the dimensions of the reinforced molded part prepared in a later step. Further examples of polyamide fibers that may be used as additives are chopped or continuous aramid fibers, such as fibers sold under the tradenames Kevlar®, Nomex©, Twaron®, or Technora®. Polyamide fibers or aramid fibers used as additives preferably have a length of at most 10 cm, in particular at most 5 cm, or at most 2 cm, or at most 1 cm, or at most 5 mm, or at most 1 mm, or at most 0.5 mm or at most 0.3 mm. Polyamide fibers or aramid fibers used as additives preferably have a diameter from 1001 nm to 50 µm, in particular from 1001 nm to 30 µm, or from 1001 nm to 20 µm The polyamide fibers used as additives may be constituted from the same or a different polyamide as the polyamide constituting the fibrous polyamide material and/or the fibrillar polyamide particles. Thus, the polyamide material according to the invention may in particular contain glass fibers, chopped plyamide fibers, in particular aramid fibers, and continuous polyamide fibers, in particular aramid fibers in addition to the fibrillar polyamide particles. Preferably, the fibrillar polyamide particles do not comprise polyamide fibers that are used as additives.

E-glass is a commercially available low alkali glass. The composition of E-glass may comprise from 52 to 57 wt% SiO₂, from 12 to 15 wt% Al₂O₃, from 16 to 26 wt% CaO and/or MgO, from 5 to 10 wt% B₂O₃ and less than 2 wt% Na₂O and/ or K₂O, but other materials may also be present. S-glass and S2-glass are commercially available magnesia-alumina-silicate glass fibers. S-glass and S2-glass may comprise up to 65 wt.% SiO₂, up to 25 wt% Al₂O₃, and up to 10 wt.% MgO. This composition is stiffer, stronger, and more expensive than E-glass and is commonly used in polymer matrix composites. R-glass fibers may contain up to 60 wt.% SiO₂, up to 9 wt.% CaO, up to 25 wt% Al₂O₃, and up to 6 wt.% MgO. C-glass fibers may contain up to 65 wt.% SiO₂, up to 4 wt% Al₂O₃, up to 14 wt.% CaO, up to 3 wt.% MgO, up to 6 wt.% B₂O₃, up to 8 wt.% Na₂O, and less than 1 wt.% Fe₂O₃ and SO₃. Carbon fibers are commercially available and well known to those skilled in the art.

When the polyamide material contains one or more reinforcing additives, for example a fiber reinforcement, such as for example glass fibers and/or polyamide fibers and/or carbon fibers as described herein, the polyamide material may contain other additives required for desired properties such as a flame retardants, processing aids, stabilizers, and/or pigments.

According to an embodiment of the invention, the polyamide material contains carbon fibers.

According to an embodiment of the invention, the polyamide material contains E-glass fibers.

According to another embodiment of the invention, the polyamide material contains R-glass fibers. Polyamide materials containing R-glass fibers displayed a very good reinforcement.

According to another embodiment of the invention, the polyamide material contains S-glass fibers or S2-glass fibers. Polyamide materials containing S-glass fibers or S2-glass fibers displayed a good stiffness.

According to another embodiment of the invention, the polyamide material contains C-glass fibers. Polyamide materials containing C-glass fibers displayed an improved resistivity to chemical substances such as acids or bases.

According to another embodiment of the invention, the polyamide material contains carbon fibers and at least one of E-glass fibers, R-glass fibers, S-glass fibers, S2-glass fibers, C-glass fibers.

According to a preferred embodiment of the invention, the polyamide constituting the fibrillar polyamide particles is poly(p-phenyleneterephthalamide) (PPTA) and the polyamide material contains at least one of the aforementioned additives, in particular glass fibers.

The one or more additives that the polyamide material may contain may be employed in different amounts. Preferably, the polyamide material contains the one or more additives in an amount from 1 to 60 vol.%, in particular from 5 to 60 vol.%, or from 10 to 60 vol.%, or from 15 to 60 vol.% or from 20 to 60 vol.%, based on the total volume of the polyamide material.

Preferably, the polyamide material contains the one or more additives as described above. Optimum results were obtained when the polyamide material according to the invention contained volumes of the fibrillar polyamide particles and the one or more additives above respective threshold values. Thus, according to a preferred embodiment of the invention, the polyamide material contains the fibrillar polyamide particles in an amount of at least 10 vol.% and the one or more additives in an amount of at least 10 vol.%, in each case based on the total volume of the polyamide material, in particular, the polyamide material contains the fibrillar polyamide particles in an amount of at least 20 vol.% and the one or more additives in an amount of at least 20 vol.%, in each case based on the total volume of the polyamide material, more particularly, the polyamide material contains the fibrillar polyamide particles in an amount of at least 30 vol.% and the one or more additives in an amount of at least 30 vol.%, in each case based on the total volume of the polyamide material. The polyamide material may contain the fibrillar polyamide particles in an amount of at least 10 vol.% and the one or more additives in an amount of at least 10 vol.%, at least 20 vol.%, or at least 30 vol.%, in each case based on the total volume of the polyamide material. The polyamide material may also contain the fibrillar polyamide particles in an amount of at least 20 vol.% and the one or more additives in an amount of at least 10 vol.%, at least 20 vol.%, or at least 30 vol.%, in each case based on the total volume of the polyamide material. The polyamide material may also contain the fibrillar polyamide particles in an amount of at least 30 vol.% and the one or more additives in an amount of at least 10 vol.%, at least 20 vol.%, or at least 30 vol.%, in each case based on the total volume of the polyamide material.

According to another embodiment of the invention, the composites contain short fibers, and more particularly, highly fibrillated short high tenacity polyamide fibers and non-fibrillated short fibers. Short fibers generally include discontinuous fibers of small diameter and high aspect ratio that may be produced by chopping continuous fibers but may also be produced by other means. According to another embodiment, the short fibers are chopped high tenacity polyamide fibers such as aramid fibers with a length preferably in the range 100 µm to 10 cm and a diameter prior to compounding preferably in the range 6 to 12 µm. The polyamide fiber aspect ratio prior to compounding, which particularly is the ratio of length to diameter, may in particular be from about 10:1 to about 2000:1, or higher. The fiber-forming substance in aramid fibers may for example be a long-chain synthetic polyamide in which at least about 85 % of the amide linkages are directly attached to two aromatic rings. Aramid fibers include meta-aramids and para-aramids, such as poly(meta-phenylene terephthalamide) and poly(para-phenylene terephthalamide) such as described in US 5 830 395 A. Moreover, the short high tenacity polyamide fibers that may be used according to the invention may be formed from any polyamide, including semiaromatic and/or aliphatic polyamide, by a suitable melt or wet fiber spinning process that provides high tenacity oriented fibers with dimensions suitable for melt compounding, and whose melting point is higher than the minimum compounding temperature fixed by the choice of polyamide matrix. These polyamide fibers may be used in particular as additives and/or as fibrous polyamide material.

According to a preferred embodiment of the polyamide material according to the invention, the matrix polyamide is selected from the group consisting of poly(epsilon-caprolactam) (PA6), poly(hexamethylene adipamide) (PA66), poly(hexamethylene isophthalamide) (PA6I), poly(hexamethylene isophthalamide-*co*-hexamethylene terephthalamide) (PA6I-PA6T copolymer), poly(hexamethylene terephthalamide-*co*-isophthalamide) (PA6TI), in particular from hexamethylene diamine with 70% terephthalic acid and 30% isophthalic acid, poly(hexamethylene terephthalamide-*co*-2-methyl pentamethylene terephthalamide) (PA6T-PADT copolymer), poly(epsilon-caprolactam-*co*-hexamethylene adipamide) (PA6-PA66 copolymer), poly(hexamethylene adipamide-*co*-hexamethylene terephthalamide) (PA66-PA6T copolymer), poly(epsilon-caprolactam-*co*-hexamethylene terephthalamide) (PA6-PA6T copolymer), and blends thereof, in particular selected from the group consisting of poly(hexamethylene sebacamide) (PA610); poly(hexamethylene adipamide) (PA66); semiaromatic polyamide from hexamethylene diamine with 70% terephthalic acid and 30% isophthalic acid (PA6TI), and blends thereof, and the polyamide constituting the fibrillar polyamide material is selected from the group consisting of poly(p-phenylene terephthalamide) (PPTA), poly(m-phenylene isophthalamide) (MPDI), poly(p-aminobenzoic acid), and poly(hexamethylene terephthalamide) (PA6T). Examples of particularly preferred matrix polyamides according to this embodiment are poly(epsilon-caprolactam) (PA6), poly(hexamethylene adipamide) (PA66), poly(epsilon-caprolactam-*co-*hexamethylene adipamide) (PA6-PA66 copolymer), poly(hexamethylene terephthalamide-*co*-isophthalamide) (PA6TI), copolymers of poly(hexamethylene terephthalamide-*co*-isophthalamide) (PA6TI) and poly(hexamethylene sebacamide) (PA610), copolymers of poly(hexamethylene terephthalamide-*co*-isophthalamide) (PA6TI) and poly(hexamethylene adipamide) (PA66), and copolymers of poly(hexamethylene terephthalamide) (PA6T) and poly(2-methyl pentamethylene terephthalamide) (PADT), as well as blends of poly(epsilon-caprolactam) (PA6) and poly(hexamethylene adipamide) (PA66), blends of poly(hexamethylene terephthalamide-*co*-isophthalamide) (PA6TI) and poly(hexamethylene adipamide) (PA66), blends of poly(hexamethylene terephthalamide-*co*-isophthalamide) (PA6TI) and poly(hexamethylene sebacamide) (PA610), and blends of poly(hexamethylene terephthalamide) (PA6T) and poly(2-methyl pentamethylene terephthalamide) (PADT).

Advantageously, in this embodiment, the covalent bonds of the polyamide molecules that make up the surface of the fibrillar polyamide particles with the matrix polyamide are amide bonds formed by formation of a copolymer between the matrix polyamide and the polyamide molecules that make up the surface of the fibrillar polyamide particles, in particular wherein the fibrillar polyamide particles are part of an amorphous sheath surrounding a substantially crystalline core of the fibrillar polyamide particles.

According to an aspect of this preferred embodiment of the invention, the polyamide material does not contain an additional reinforcing additive. According to another aspect of this preferred embodiment of the invention, the polyamide material according to the invention may contain one or more additives, in particular polyamide fibers and/or carbon fibers and/or glass fibers selected from the group consisting of E-glass fibers, R-glass fibers, S-glass fibers, S2-glass fibers, C-glass fibers, and mixtures thereof. According to another aspect of this preferred embodiment of the invention, the polyamide material contains glass fibers, in particular selected from the group consisting of E-glass fibers, R-glass fibers, S-glass fibers, S2-glass fibers, C-glass fibers, and mixtures thereof. According to another aspect of the preferred embodiment of the invention, the polyamide material contains carbon fibers.

In another aspect of this preferred embodiment of the invention, the polyamide material contains the fibrillar polyamide particles in an amount of at least 10 vol.% and the one or more additives in an amount of at least 10 vol.%, in each case based on the total volume of the polyamide material, more particularly, the polyamide material contains the fibrillar polyamide particles in an amount of at least 20 vol.% and the one or more additives in an amount of at least 20 vol.%, in each case based on the total volume of the polyamide material, even more particularly, the polyamide material contains the fibrillar polyamide particles in an amount of at least 30 vol.% and the one or more additives in an amount of at least 30 vol.%, in each case based on the total volume of the polyamide material. According to this aspect of the preferred embodiment of the invention, the polyamide material may contain the fibrillar polyamide particles in an amount of at least 10 vol.% and the one or more additives in an amount of at least 10 vol.%, at least 20 vol.%, or at least 30 vol.%, in each case based on the total volume of the polyamide material. The polyamide material may also contain the fibrillar polyamide particles in an amount of at least 20 vol.% and the one or more additives in an amount of at least 10 vol.%, at least 20 vol.%, or at least 30 vol.%, in each case based on the total volume of the polyamide material. The polyamide material may also contain the fibrillar polyamide particles in an amount of at least 30 vol.% and the one or more additives in an amount of at least 10 vol.%, at least 20 vol.%, or at least 30 vol.%, in each case based on the total volume of the polyamide material.

The invention also provides for a method for the preparation of a polyamide material according to the invention, comprising the steps of
a. providing a matrix polyamide;
b. providing a fibrous polyamide material;
c. mixing the fibrous polyamide material and the matrix polyamide for at least 2 minutes and at most 60 minutes at a temperature of at least 240°C.

During the mixing, some or all of the constituting particles of the fibrous polyamide material provided in the method according to the invention are split into smaller polyamide particles with a smaller diameter than the constituting particles of the fibrous polyamide material before the mixing, as explained above. Covalent bonds between the polyamide molecules that make up the surface of the fibrillar polyamide particles and the matrix polymer are formed, as explained above. However, the mixing time required in order to obtain a polyamide material in which the fibrous polyamide material has been sufficiently fibrillated may vary depending on the mixing device used. However, it was found that a mixing time of at least 2 minutes and at most 60 minutes generally provides a polyamide material according to the invention.

According to an embodiment of the invention, the mixing is conducted for at least 3 minutes, in particular for at least 4 minutes, or for at least 5 minutes, or for at least 6 minutes, or for at least 7 minutes, or for at least 8 minutes, or for at least 9 minutes, or for at least 10 minutes. It has been found that longer mixing times result in polyamide material with improved ductility and strength. However, it has also been found that the properties of the resulting polyamide material deteriorate when the mixing times are too long. Preferably, the mixing is conducted for at most 50 minutes, in particular at most 45 minutes, or at most 40 minutes, or at most 35 minutes, or at most 30 minutes, or at most 25 minutes, or at most 20 minutes.

The temperature of the mixing in the method according to the invention is an important factor. The temperature during the mixing must be high enough to allow for the formation of covalent bonds between the polyamide molecules that make up the surface of the fibrillar polyamide particles and the matrix polymer. Advantageously, the mixing is conducted at a temperature of at least 245°C, in particular at least 250°C, or at least 255°C, or at least 260°C, or at least 265°C, or at least 270°C, or at least 275°C, or at least 280°C. However, the temperature must not be too high in order to avoid thermal damage to the polyamide material. Preferably, the mixing in the method according to the invention is conducted at a temperature of at most 340°C, in particular at most 335°C, or at most 330°C, or at most 325°C, or at most 320°C.

In the method according to the invention, a fibrous polyamide material is provided. Preferably, the fibrous polyamide material comprises constituting particles, in particular polyamide fibers. The constituting particles of the fibrous polyamide material, in particular the polyamide fibers, preferably have a tenacity of at least 3 g/denier, in particular at least 5 g/denier, or at least 10 g/denier, or at least 15 g/denier, or at least 20 g/denier. Advantageously, the constituting particles of the fibrous polyamide material, in particular the polyamide fibers, have a diameter prior to mixing of from 1001 nm to 50 µm, in particular from 1001 nm to 30 µm, or from 1001 nm to 20 µm.

The diameters of the individual constituting particles of the fibrous polyamide material, in particular of the individual polyamide fibers, may all be the same or may vary within the ranges mentioned herein. Thus, the individual constituting particles of the fibrous polyamide material, in particular of the individual polyamide fibers, may all have a diameter of, for example 10 µm, or they may have varying diameters within the ranges mentioned herein.

Preferably, the constituting particles of the fibrous polyamide material are constituted from polyamide particles with a smaller diameter, for example polyamide fibrils and/or bundles of polyamide fibrils, into which some or all of the constituting particles of the fibrous polyamide material can be split up, for example by fibrillation.

The details mentioned above for the aspect ratio, the length, the crystallinity, and/or the polyamide of the fibrillar polyamide particles also apply to the constituting particles of the fibrous polyamide material, in particular the polyamide fibers.

According to a preferred embodiment of the invention, the fibrous polyamide material contains or consists of aramid fibers, in particular made from poly(p-phenylene terephthalamide) (PPTA) or poly(m-phenylene isophthalamide) (MPDI). Advantageously, the aramid fibers have a length of 100 µm to 10 cm, in particular 1 mm to 10 mm, and/or a diameter from 1 to 20 µm. Such aramid fibers are commercially available, for example, under the trade names Kevlar®, Twaron®, Technora®, or Nomex®.

According to another embodiment of the method of the invention, the fibrous polyamide material contains short fibers that include discontinuous fibers of small diameter and/or high aspect ratio that in particular may be produced by chopping continuous fibers but may also be produced by other means. According to another embodiment, the fibrous polyamide material may contain short fibers, in particular chopped high tenacity polyamide fibers such as aramid fibers. The constituting particles of the fibrous material, in particular the polyamide or aramid fibers, may have a length preferably in the range 100 µm to 10 cm and/or a diameter prior to compounding preferably in the range 6 to 12 µm. The aspect ratio of the constituting particles of the fibrous polyamide material, in particular of the polyamide or aramid fibers, prior to compounding, which is the ratio of length to diameter, may in particular be from about 10:1 to about 2000:1, or higher. The fiber-forming substance in the fibrous polyamide material, in particular in aramid fibers, may for example be a long-chain synthetic polyamide in which at least about 85 % of the amide linkages are directly attached to two aromatic rings. Aramid fibers include meta-aramids and para-aramids, such as polymetaphenylene terephthalamide and polyparaphenylene terephthalamide such as described in US 5 830 395 A. Advantageously, the fibrous polyamide material, in particular the short high tenacity polyamide fibers, more particularly the aramid fibers, that may be used according to the invention may be formed from any polyamide, including semiaromatic and/or aliphatic polyamide, by a suitable melt or wet fiber spinning process that provides fibrous material, in which the constituting particles have a high tenacity and a high orientation, in particular that provides high tenacity oriented fibers, with dimensions suitable for melt compounding, and whose melting point is higher than the minimum compounding temperature fixed by the choice of polyamide matrix.

The fibrous polyamide material, in particular the polyamide fibers, may be employed in different amounts in the method according to the invention. Preferably, the fibrous polyamide material, in particular the polyamide fibers, is employed in an amount from 1 to 60 vol.%, in particular from 5 to 60 vol.%, or from 10 to 60 vol.%, or from 15 to 60 vol.% or from 20 to 60 vol.%, based on the total volume of the polyamide material.

The details mentioned above for the matrix polyamide of the polyamide material according to the invention also apply to the matrix polyamide provided in the method according to the invention.

According to a preferred embodiment of the invention, in one or more additional steps of the method according to the invention, one or more additives selected from the group consisting of other polymers and/or non-polymeric inorganic or organic fillers, rubber tougheners, flame retardants, processing aids, stabilizers, pigments, glass fibers, in particular E-glass fibers, S-glass fibers, S2-glass fibers, R-glass fibers, or C-glass fibers, natural fibers such as hemp, sisal or cellulose, carbon fibers, polyamide fibers, graphene, and mixtures thereof, in particular E-glass fibers, R-glass fibers, S-glass fibers, S2-glass fibers, or C-glass fibers, and mixtures thereof, are provided and mixed with the matrix polyamide and the fibrous polyamide material, in particular with the polyamide fibers.

Thus, in a preferred embodiment of the invention, a method for the preparation of a polyamide material according to the invention is provided, comprising the steps of
a. providing a matrix polyamide;
b. providing a fibrous polyamide material;
c. providing one or more additives, in particular selected from the group consisting of other polymers and/or non-polymeric inorganic or organic fillers, rubber tougheners, flame retardants, processing aids, stabilizers, pigments, glass fibers, in particular E-glass fibers, S-glass fibers, S2-glass fibers, R-glass fibers, or C-glass fibers, natural fibers such as hemp, sisal or cellulose, carbon fibers, polyamide fibers, graphene, and mixtures thereof, more particularly selected from the group consisting of E-glass fibers, R-glass fibers, S-glass fibers, S2-glass fibers, or C-glass fibers, and mixtures thereof;
d. mixing the fibrous polyamide material, the matrix polyamide, and the one or more additives for at least 2 minutes and at most 60 minutes at a temperature of at least 240°C.

The details mentioned above for the one or more additives of the polyamide material according to the invention also apply to the one or more additives of the method according to the invention. Moreover, the details concerning the temperature, the mixing time, the matrix polyamide, and the fibrous polyamide material mentioned above for the method according to the invention particularly also apply to the preferred embodiment of the method of the invention.

According to a preferred embodiment of the invention, the polyamide fibers that may be employed as additives, are added in such a way that they are substantially not fibrillated, in particular in such a way that they are not fibrillated. This can be achieved for example by adding the additive at a late stage of the mixing or by decreasing the shear forces acting in the mixing when adding the polyamide fibers used as additives.

Moreover, as detailed above, the polyamide material according to the invention may contain more than one additive. The addition of more than one additive may be achieved in the method according to the invention by providing and adding a mixture of the additives or by performing several addition steps for different additives and/or mixtures of additives at different times in the method according to the invention, preferably at different times during the mixing. For example, in the method according to the invention, glass fibers may be provided and mixed with the matrix polyamide and the fibrous polyamide material, and at different time points during this mixing, one or more additional additives may be added. The matrix polyamide and the fibrous polyamide material may also be mixed, then a first additive, such as glass fibers, may be added during this mixing, and, after the addition of the glass fibers, a second additive, such as polyamide fibers, may be added and mixed with the other components. Further additives may be added in subsequent addition steps and mixed with the other components. Accordingly, one or more additives may be added in the method according to the invention.

The one or more additives may be employed in different amounts in the method according to the invention. Preferably, the one or more additives are employed in an amount from 1 to 60 vol.%, in particular from 5 to 60 vol.%, or from 10 to 60 vol.%, or from 15 to 60 vol.% or from 20 to 60 vol.%, based on the total volume of the polyamide material. Optimum results were obtained when volumes of the fibrous polyamide material and the one or more additives were employed above a threshold value in the method according to the invention. Thus, according to a preferred embodiment of the invention the fibrous polyamide material is employed in an amount of at least 10 vol.% and the one or more additives are employed in an amount of at least 10 vol.%, in each case based on the total volume of the polyamide material, in particular the fibrous polyamide material is employed in an amount of at least 20 vol.% and the one or more additives are employed in an amount of at least 20 vol.%, in each case based on the total volume of the polyamide material, more particularly the fibrous polyamide material is employed in an amount of at least 30 vol.% and the one or more additives are employed in an amount of at least 30 vol.%, in each case based on the total volume of the polyamide material. The fibrous polyamide material may be employed in an amount of at least 10 vol.% and the one or more additives may be employed in an amount of at least 10 vol.%, at least 20 vol.%, or at least 30 vol.%, in each case based on the total volume of the polyamide material. The fibrous polyamide material may also be employed in an amount of at least 20 vol.% and the one or more additives may be employed in an amount of at least 10 vol.%, at least 20 vol.%, or at least 30 vol.%, in each case based on the total volume of the polyamide material. The fibrous polyamide material may also be employed in an amount of at least 30 vol.% and the one or more additives may be employed in an amount of at least 10 vol.%, at least 20 vol.%, or at least 30 vol.%, in each case based on the total volume of the polyamide material.

In the method according to the invention, the mixing can be conducted in different ways, for example by blending, milling, and/or extruding. Accordingly, the mixing may be conducted using different mixing devices such as extruders, granulators, ribbon blenders, V blenders, or paddle mixers. Preferably, the mixing is carried out by extrusion, in particular by melt extrusion.

The invention also relates to a polyamide material obtainable by the method of the invention.

According to another aspect of the invention, the invention further relates to a polyamide material obtainable by mixing a matrix polyamide and a fibrous polyamide material, wherein the fibrous polyamide material contains constituting particles, and wherein the polyamide material contains fibrillar polyamide particles, wherein at least 10 vol.%, in particular at least 20 vol.%, or 30 vol.%, of the fibrillar polyamide particles, based on the total volume of the fibrous polyamide material, has a cross-section with a smaller area and/or a smaller diameter than those of the constituting particles of the fibrous polyamide material before the mixing, in particular wherein at least 10 vol.%, in particular at least 20 vol.%, or 30 vol.%, of the fibrillar polyamide particles, based on the total volume of the fibrous polyamide material, has a diameter of 5 to 1000 nm, and wherein the polyamide molecules that make up the surface of the fibrillar polyamide particles are connected with the matrix polyamide by covalent bonds.

The details mentioned above for the matrix polyamide also apply to the matrix polyamide according to this aspect of the invention. The details mentioned above for the fibrous polyamide material also apply to the fibrous polyamide material according to this aspect of the invention. The details mentioned above for the fibrillar polyamide particles also apply to the fibrillar polyamide particles according to this aspect of the invention.

The details mentioned above for the covalent bonds also apply to the covalent bonds according to this aspect of the invention.

According to an embodiment of this aspect of the invention, at least 40 vol.%, in particular at least 50 vol.%, or at least 60 vol.%, or at least 70 vol.%, or at least 80 vol.%, or at least 90 vol.%, or at least 95 vol.%, or at least 99 vol.% of the fibrillar polyamide particles, based on the total volume of the fibrous polyamide material, has cross-section with a smaller area and/or a smaller diameter than those of the constituting particles of the fibrous polyamide material before the mixing, more particularly at least 40 vol.%, in particular at least 50 vol.%, or at least 60 vol.%, or at least 70 vol.%, or at least 80 vol.%, or at least 90 vol.%, or at least 95 vol.%, or at least 99 vol.% of the fibrillar polyamide particles, based on the total volume of the fibrous polyamide material, has a diameter of 5 nm to 1000 nm, more particularly 5 nm to 900 nm, or 5 nm to 800 nm, or 5 nm to 700 nm, or 5 nm to 600 nm, or 5 nm to 500 nm, or 5 nm to 400 nm, or 5 nm to 300 nm, or 5 nm to 200 nm, or 5 nm to 100 nm, or 5 nm to 75 nm, or 5 nm to 50 nm.

According to another embodiment of this aspect of the invention, the polyamide material is obtainable by the method according to the invention.

According to another embodiment of this aspect of the invention, the polyamide material is obtained using the fibrous polyamide material in an amount from 1 to 60 vol.%, in particular from 5 to 60 vol.%, or from 10 to 60 vol.%, or from 15 to 60 vol.% or from 20 to 60 vol.%, based on the total volume of the polyamide material.

According to another embodiment of this aspect of the invention, the polyamide material contains one or more additives. The details mentioned above for the additives also apply to the additives according to this aspect of the invention. Advantageously, according to this aspect of the invention, the polyamide material contains the one or more additives in an amount from 1 to 60 vol.%, more particularly from 5 to 60 vol.%, or from 10 to 60 vol.%, or from 15 to 60 vol.% or from 20 to 60 vol.%, based on the total volume of the polyamide material.

The invention further relates to the use of a polyamide material according to the invention for the manufacture of molded parts, fibers, or foils.

The invention also relates to molded parts, fibers, or foils containing a polyamide material according to the invention.

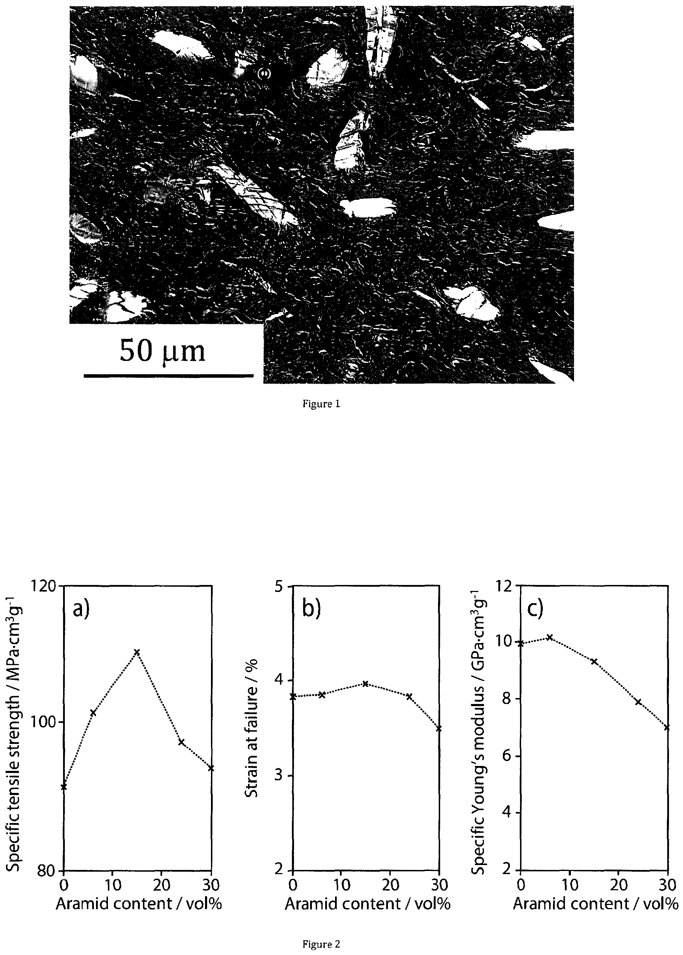

- Fig. 1: shows a 250 nm thick microtomed section from an injection molding prepared from PA610 and 15 vol.% aramid fibers, extrusion compounded at 280 °C for 20 minutes resulting in partly fibrillated aramid fibers containing aramid fibrils in the material, observed in the optical microscope (Nomarski differential interference contrast). A fine dispersion of the aramid fibrils, (light) with maximum diameters of the order of 500 nm is visible in the matrix polyamide (dark) along with partially disintegrated fragments of the original aramid fibers (the constituting particles of the fibrous polyamide material). The volume fraction of fibrillated material is approximately 50 % in this case, the volume fraction of fibrillar polyamide particles with a diameter of 5 to 1000 nm is at least 40 %.
- Fig. 2: shows graphs of the mechanical properties of a polyamide material with PA610 as the matrix polyamide and 30 vol.% short fiber in which different proportions of the glass fiber have been replaced by the equivalent vol.% of fibrillated aramid fiber (fibrillar polyamide particles) as indicated. The mixtures were obtained by extrusion compounding the starting materials at 260 °C in one step with a residence time of 10 minutes. It can be seen in particular for the tensile strength of the resulting polyamide material that there is a maximum at equal volume ratios of the glass fiber and the aramid fiber.

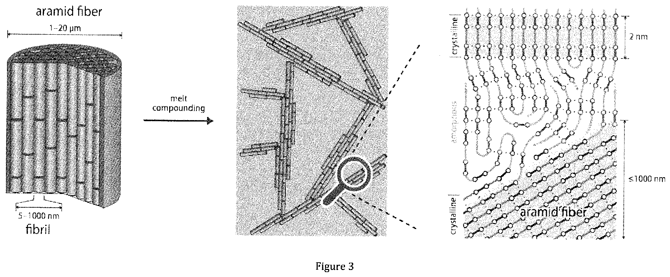

- Fig. 3: shows (a) a schematic of the potential structure of aromatic polyamide (aramid) fibers, (b) a schematic of the presumed polyamide material according to the present invention, and (c) a schematic of a presumed close-up view of the matrix-fiber interface. Without wishing to be bound by theory, (a) exemplary aromatic polyamide (aramid) fibers are believed to be composed of bundles of ultra-oriented fibrils separated by thin amorphous layers in which the functional groups are concentrated; (b) on mixing, in particular on extrusion compounding, with another polyamide, some or all of the fibrous material, in particular the aramid fibers, is believed to break up (fibrillate) to form a dispersion of fibrillar polyamide particles, in particular of exemplary ultra-oriented aramid fibrils; (c) good dispersion of the fibrillar polyamide particles, in particular the fibrils, in the matrix polyamide and good adhesion between the fibrillar polyamide particles, in particular the fibrils, and the polyamide matrix are believed to be ensured by transamidation between the surface, in particular the amorphous surface, of the fibrillar polyamide particles and the matrix polyamide.

### EXAMPLES

Materials: poly(hexamethylene sebacamide) (PA610); poly(hexamethylene adipamide) (PA66); semiaromatic polyamide from hexamethylene diamine with 70% terephthalic acid and 30% isophthalic acid (PA6TI); blend containing 60 wt.% PA6TI and 40 wt.% PA66 (PA6TI-40 wt% PA66); blend containing 60 wt.% PA6TI and 40 wt.% PA610 (PA6TI-40 wt% PA610); chopped aramid fibers with a length of 6 mm and a diameter of 12 µm.; E-glass fibers with a length of 6 mm and a diameter of 10 µm.

The amount of fibrillar polyamide particles, in particular of the aramid fibrils, in the prepared polyamide materials was determined by analyzing at least five optical micrographs using image evaluation software.

Examples 1-3 (Table 2) comprise a series of polyamide materials of PA610 containing fibrillated aramid fibers. The volume fraction of aramid is kept equal to 15 %. To avoid moisture absorption, PA610 granules and fibers were stored in vacuum for at least 48 h before processing. In the prepared polyamide materials of Examples 1 to 3, at least 10 vol.% of the aramid fibrils and bundles of aramid fibrils of the fibrillated aramid fibers, based on the total volume of the fibrillated aramid fibers, had a diameter from 5 to 1000 nm. In particular, in the polyamide material of Example 1, 27 to 31 vol.% of the aramid fibrils and bundles of aramid fibrils of the fibrillated aramid fibers, based on the total volume of the fibrillated aramid fibers, had a diameter from 5 to 500 nm. In the polyamide material of Example 3, 42 to 48 vol.% of the aramid fibrils and bundles of aramid fibrils of the fibrillated aramid fibers, based on the total volume of the fibrillated aramid fibers, had a diameter from 5 to 500 nm.

The polyamide materials in Examples 1 to 3 were prepared as follows. Granules of PA610 and chopped aramid fibers were melt compounded in a co-rotating twin-screw micro-compounder (DSM MC5) at a temperature above the melting temperatures of PA610. The barrel temperature was set to 320°C, and the polymers were compounded at a screw speed of 100 rpm with a residence time varying from 5 min (Example 1) to 20 min (Example 3).

The resulting polyamide materials were then injected using a DSM injection-molding machine to form dog-bone-shaped tensile test-bars of 20 mm in length, 2 mm in thickness and 4 mm in width. The cylinder and mold temperatures were 320 °C and 160 °C, respectively, and the injection pressure was 6 bars.

The test-bars were dried for 1 h at 180 °C (well above their glass transition temperature) under vacuum and stored at room temperature under vacuum before mechanical testing, the results of which are given in Table 2. The tensile test bars were tested using a universal testing machine (Walter Bai UTM) at a nominal strain rate of 10 % min⁻¹. The strain was measured using a clip-on extensometer with a gauge length of 20 mm. The Young's modulus (in GPa) was taken to be the slope of the nominal stress-strain curve in the elastic regime (hence for strains ranging from 0 % to 1 %). The strain at failure and stress at failure were directly identified from the ultimate nominal stress-strain values prior to macroscopic failure of the test bars.

Examples 4-7 (Table 3) comprise a series of polyamide materials of PA66 containing fibrillated aramid fibers. The volume fraction of aramid is kept equal to 15 %. The procedure was identical to that described for Examples 1-3, but PA610 was replaced by PA66 in the formulations, and their mechanical properties were tested as described for Examples 1-3. In the prepared polyamide materials of Examples 5 to 7, at least 10 vol.% of the aramid fibrils and bundles of aramid fibrils of the fibrillated aramid fibers, based on the total volume of the fibrillated aramid fibers, had a diameter from 5 to 1000.

Examples 8-9 (Table 4) comprise a series of polyamide materials of blends of PA6TI (60 wt%) and PA610 (40 wt%) containing fibrillated aramid fibers. The volume fraction of aramid is kept equal to 15 %. The procedure was identical to that described for Examples 1-3, but PA610 was replaced by the blend PA6TI-40wt.% PA610 in the formulations, and their mechanical properties were tested as described for Examples 1-3. In the prepared polyamide materials of Examples 8 and 9, at least 10 vol.% of the aramid fibrils and bundles of aramid fibrils of the fibrillated aramid fibers, based on the total volume of the fibrillated aramid fibers, had a diameter from 5 to 1000.

Examples 10-13 (Table 5) comprise a series of polyamide materials of blends of PA6TI (60 wt%) and PA66 (40 wt%) containing fibrillated aramid fibers. The volume fraction of aramid is kept equal to 15 %. The procedure was identical to that described for Examples 1-3, but PA610 was replaced by the blend PA6TI-40wt.% PA66 in the formulations, and their mechanical properties were tested as described for Examples 1-3. In the prepared polyamide materials of Examples 11 to 13, at least 10 vol.% of the aramid fibrils and bundles of aramid fibrils of the fibrillated aramid fibers, based on the total volume of the fibrillated aramid fibers, had a diameter of from 5 to 1000 nm.

Examples 14-18 (Table 6) comprise a series of composites of PA610 containing fibrillated aramid fibers as well as glass fiber, prepared with a total constant volume fraction of fibers equal to 30 %. Different proportions of short glass fibers were replaced by the equivalent volume fraction of aramid fibers. This series was prepared by extrusion compounding at 260 °C in one step with a residence time of 10 minutes. In the prepared polyamide materials of Example 15 to 18, at least 10 vol.% of the aramid fibrils and bundles of aramid fibrils of the fibrillated aramid fibers, based on the total volume of the fibrillated aramid fibers, had a diameter of from 5 to 1000 nm.

**Table 1. Mechanical properties of the different polyamide matrices used in the Examples 1 to 18 in Tables 2 to 5 are provided for comparison.**

| Resin | Young's modulus [GPa] | Stress at failure [MPa] | Strain at failure [%] |
|---|---|---|---|
| PA610 | 2.57 | 58 | 57 |
| PA66 | 2.86 | 81 | 45 |
| PA6TI | 3.9 | 139 | 10 |
| PA6TI-40 wt% PA610 | 3.2 | 94 | 68 |
| PA6TI-40 wt% PA66 | 3.3 | 103 | 53 |

**Table 2. Mechanical properties of PA610 coextruded at 320 °C with 15 vol% aramid fiber for different residence times (Examples 1-3). Standard deviations are given in parentheses.**

| Ex. | Residence time [min] | Young's modulus [GPa] | Stress at failure [MPa] | Strain at failure [%] |
|---|---|---|---|---|
| 1 | 5 | 4.46 (0.25) | 86.3 (3.1) | 8.6 (1.4) |
| 2 | 10 | 4.59 (0.13) | 97.7 (3.8) | 10.2 (2.5) |
| 3 | 20 | 4.38 (0.13) | 94.2 (8.0) | 11.4 (1.2) |

As can be seen from Table 2, covalent bonding between the fibrillated polyamide fibers and the polyamide matrix is established already after short compounding times and results in a strong fiber-matrix interface, providing a significant increase in stiffness and tensile strength compared with the values measured for the unmodified matrix. Further, a significant improvement in the tensile strength and ductility with increasing residence times in the extruder and hence increasing fibrillation of the aramid fiber, but without significant losses in stiffness can be observed. This change of properties with residence time in the extruder is attributed to transamidation reactions between the surface of the aramid fibers, in particular the fibrillated aramid fibers, and the polyamide matrix. By contrast, in the absence of the aramid fiber, the mechanical properties of PA610 do not change significantly with residence time under the same compounding conditions. Moreover, longer residence times up to 20 minutes yield a polyamide material with improved mechanical properties. However, it becomes also apparent that the mixing must not be conducted for too long as the stress at failure starts to decrease for a mixing time of 20 minutes.

**Table 3. Mechanical properties of PA66 coextruded at 320 °C with 15 vol% aramid fiber for different residence times (Example 4-7). Standard deviations are given in parentheses.**

| Ex. | Residence time [min] | Young's modulus [GPa] | Stress at failure [MPa] | Strain at failure [%] |
|---|---|---|---|---|
| 4 (comp) | 1 | 4.60 (0) | 98.5 (0.7) | 4.4 (0.1) |
| 5 | 5 | 5.06 (0.04) | 107.5 (2.1) | 6.1 (0.3) |
| 6 | 10 | 5.21 (0.01) | 111.0 (2.6) | 5.7 (0.9) |
| 7 | 20 | 5.06 (0.04) | 107.5 (2.1) | 6.1 (0.3) |

As can be seen from Table 3, covalent bonding between the fibrillated polyamide fibers and the polyamide matrix is established already after short compounding times and results in a strong fiber-matrix interface, providing a significant increase in stiffness and tensile strength compared with the values measured for the unmodified matrix. Further, a significant improvement in the tensile strength and ductility with increasing residence times in the extruder and hence increasing fibrillation of the aramid fiber, but without significant losses in stiffness can be observed. This change of properties with residence time in the extruder is attributed to transamidation reactions between the surface of the aramid fibers, in particular the fibrillated aramid fibers, and the polyamide matrix. By contrast, in the absence of the aramid fiber, the mechanical properties of PA66 do not change significantly with residence time under the same compounding conditions. Moreover, also for PA66 as the matrix polyamide, longer residence times up to 20 minutes yield a polyamide material with improved mechanical properties. However, it becomes also apparent in this case that the mixing must not be conducted for too long as the stress at failure starts to decrease for a mixing time of 20 minutes. Example 4 is a comparative example and shows that a mixing time of 1 minute is insufficient to allow for the preparation of a polyamide material according to the invention with the desired mechanical properties.

**Table 4. Mechanical properties of PA6TI-40 wt% PA610 coextruded at 320 °C with 15 vol% aramid fiber for different residence times (Examples 8-9). Standard deviations are given in parentheses.**

| Ex. | Residence time [min] | Young's modulus [GPa] | Stress at failure [MPa] | Strain at failure [%] |
|---|---|---|---|---|
| 8 | 10 | 5.54 (0.16) | 116.0 (3.6) | 3.9 (0.7) |
| 9 | 20 | 5.76 (0.16) | 117.3 (4.7) | 7.0 (1.3) |

As can be seen from Table 4, covalent bonding between the fibrillated polyamide fibers and the polyamide matrix is established already after short compounding times and results in a strong fiber-matrix interface, providing a significant increase in stiffness and tensile strength compared with the values measured for the unmodified matrix. Further, a significant improvement in the tensile strength and ductility with increasing residence times in the extruder and hence increasing fibrillation of the aramid fiber, but without significant losses in stiffness can be observed. This change of properties with residence time in the extruder is attributed to transamidation reactions between the surface of the aramid fibers, in particular the fibrillated aramid fibers, and the polyamide matrix. By contrast, in the absence of the aramid fiber, the mechanical properties of a blend containing 60 wt.% PA6TI and 40 wt.% PA610 do not change significantly with residence time under the same compounding conditions. Moreover, also for a blend of 60 wt.% PA6TI with 40 wt.% PA610 as the matrix polyamide, longer residence times up to 20 minutes yield a polyamide material with improved mechanical properties.

**Table 5. Mechanical properties of PA6TI-40 wt% PA66 coextruded at 320 °C with 15 vol% aramid fiber for different residence times (Examples 10-13). Standard deviations are given in parentheses.**

| Ex. | Residence time [min] | Young's modulus [GPa] | Stress at failure [MPa] | Strain at failure [%] |
|---|---|---|---|---|
| 10 (comp) | 1 | 5.23 (0.02) | 123.0 (2.0) | 4.1 (0.2) |
| 11 | 5 | 4.97 (0.38) | 126.0 (0.0) | 4.7 (0.1) |
| 12 | 10 | 5.45 (0.22) | 129.7(3.1) | 5.5 (0.3) |
| 13 | 20 | 5.69 (0.10) | 130.8 (1.6) | 5.8 (0.3) |

As can be seen from Table 5, covalent bonding between the fibrillated polyamide fibers and the polyamide matrix is established after sufficiently long compounding times and results in a strong fiber-matrix interface, providing a significant increase in stiffness and tensile strength compared with the values measured for the unmodified matrix. Further, a significant improvement in the tensile strength and ductility with increasing residence times in the extruder and hence increasing fibrillation of the aramid fiber, but without significant losses in stiffness can be observed. This change of properties with residence time in the extruder is attributed to transamidation reactions between the surface of the aramid fibers, in particular the fibrillated aramid fibers, and the polyamide matrix. By contrast, in the absence of the aramid fiber, the mechanical properties of a blend containing 60 wt.% PA6TI and 40 wt.% PA610 do not change significantly with residence time under the same compounding conditions. Moreover, also for a blend of 60 wt.% PA6TI with 40 wt.% PA66 as the matrix polyamide, longer residence times yield a polyamide material with improved mechanical properties. In contrast to Examples 5-7 (Table 3), the mechanical properties do not start to decrease after 20 minutes of mixing. Example 10 is a comparative example and shows that mixing times longer than 1 minute are required for the preparation of a polyamide material according to the invention with improved mechanical properties.

**Table 6. Mechanical properties of PA610-30 vol% fiber composites containing aramid fiber and short glass fiber in which different proportions of the glass fiber have been replaced by the equivalent vol% of aramid fiber as indicated (Examples 14-18). All specimens were co-extruded at 260 °C in one step with a residence time of 10 minutes. Standard deviations are given in parentheses.**

| Ex. | Aramid content [vol%] | Young's modulus [GPa] | Stress at failure [MPa] | Strain at failure [%] |
|---|---|---|---|---|
| 14 (comp) | 0 | 12.19 (0.70) | 140.3 (1.4) | 3.9 (0.3) |
| 15 | 6 | 11.99 (0.49) | 148.7 (1.0) | 3.8 (0.3) |
| 16 | 15 | 10.03 (0.09) | 150.0 (3.0) | 4.0 (0.3) |
| 17 | 24 | 7.48 (0.11) | 123.3 (2.9) | 3.8 (0.4) |
| 18 | 30 | 6.03 (0.47) | 112.8 (6) | 3.5 (0.02) |

Table 6 shows the mechanical properties of extrusion-compounded PA610 containing 30 vol.% glass fibers and/or aramid fibers. Remarkable improvements in the mechanical properties were particularly observed in the case of substitution of part of the glass fibers by an equivalent volume of fibrillated aramid fiber covalently bonded to the matrix which resulted not only in reduced density, but also an increase in specific tensile strength of up to 20 % while maintaining the specific stiffness and ductility. This corresponds to an increase in tensile fracture energy by 10 to 20 % with respect to the unmodified glass fiber-reinforced composite. Example 14 is a comparative Example.

Moreover, dynamic mechanical analysis of matrix polyamides and fibrous polyamide material, in particular aramid fibers, according to the invention was conducted after premixing. Table 7 shows, for example, data for the storage modulus, *E'*, of PA610 containing 15 vol% of dispersed aramid fiber premixed at 300 °C for 5 minutes, measured by dynamic mechanical analysis at a frequency of 1 Hz, and a constant temperature of 300 °C. The storage modulus increased strongly over a measurement time of approximately 2 minutes and converged to a limiting value for longer times at this temperature. Because there is no mechanical contribution to the degree of fibrillation under these conditions, the results in Table 7 demonstrate that covalent bonds are formed between the matrix polyamide and the fibrous polyamide material, in particular the fibrillar polyamide particles, and that the extent of covalent bonding increases with time, resulting in the observed increase in storage modulus.

**Table 7 shows the storage modulus, E', of PA610 containing 15 vol% of aramid fiber pre-compounded at 300 °C for 5 minutes, measured as a function of time, t, by dynamical mechanical analysis in tension at a constant temperature of 300 °C and a frequency of 1Hz.**

| | | | | | | |
|---|---|---|---|---|---|---|
| *t* [min] | 0 | 10 | 20 | 50 | 100 | 200 |
| *E'* [MPa] | 4.1 | 7.8 | 13 | 21.5 | 31.4 | 33.5 |

## Claims

1. Polyamide material containing a polyamide as the matrix polyamide and fibrillar polyamide particles, wherein at least 10 vol.% of the fibrillar polyamide particles, based on the total volume of the fibrillar polyamide particles, have a diameter of 5 to 1000 nm, and wherein the polyamide molecules that make up the surface of the fibrillar polyamide particles are connected with the matrix polyamide by covalent bonds.

2. Polyamide material according to claim 1, wherein at least 20 vol.%, in particular at least 30 vol.%, or at least 40 vol.%, or at least 50 vol.%, or at least 60 vol.%, or at least 70 vol.%, or at least 80 vol.%, or at least 90 vol.%, or at least 95 vol.%, or at least 99 vol.%, of the fibrillar polyamide particles, based on the total volume of the fibrillar polyamide particles, has a diameter of 5 nm to 1000 nm, in particular 5 to 900 nm, or 5 nm to 800 nm, or 5 nm to 700 nm, or 5 nm to 600 nm, or 5 nm to 500 nm, or 5 nm to 400 nm, or 5 nm to 300 nm, or 5 nm to 200 nm, or 5 nm to 100 nm, or 5 nm to 75 nm, or 5 nm to 50 nm.

3. Polyamide material according to any of the preceding claims, wherein the fibrillar polyamide particles have an aspect ratio, defined as the length of an individual fibrillar polyamide particle divided by its diameter, of from 10:1 to 4000000:1, in particular from 20:1 to 2000000:1, or from 40:1 to 1000000:1, or from 100:1 to 1000000:1; and/or wherein the fibrillar polyamide particles have a length of from 50 nm to 2 cm, in particular from 100 nm to 1 cm, or from 500 nm to 5 mm.

4. Polyamide material according to any of the preceding claims, wherein the fibrillar polyamide particles are substantially crystalline.

5. Polyamide material according to any of the preceding claims, wherein the fibrillar polyamide particles contain a crystalline phase that contains more than one polyamide polymer chains, wherein in the crystalline phase, the mean angle between the polyamide polymer chains and the long axis of the fibrillar polyamide particles is at most 30°, in particular at most 20°, or at most 15°, or at most 12°.

6. Polyamide material according to any of the preceding claims, wherein the polyamide constituting the fibrillar polyamide particles has a higher melting point and/or a higher glass transition temperature (Tg) than the matrix polyamide; and/or wherein the polyamide constituting the fibrillar polyamide particles is aromatic or semiaromatic.

7. Polyamide material according to any of the preceding claims, wherein the polyamide constituting the fibrillar polyamide particles is selected from the group consisting of semiaromatic polyamides of the type PAnT, wherein T designates a terephthalic acid residue and n designates the number of carbon atoms in the aliphatic segment, poly(p-phenylene terephthalamide) (PPTA), poly(m-phenylene isophthalamide) (MPDI), poly(p-phenylene-*co*-3,4'-diphenyl ether terephthalamide) (ODA-PPTA copolymer), poly(5-amino-2(p-aminophenyl) benzimadole terephthalamide) (SVM), Poly(4-methyl-m-phenylene terephthalamide) (4M-MPTA), poly(p-aminobenzoic acid), poly(hexamethylene terephthalamide) (PA6T), poly(nonamethylene terephthalamide) (PA9T), poly(decamethylene terephthalamide) (PA10T), and poly(dodecamethylene terephthalamide) (PA12T), in particular selected from the group consisting of poly(p-phenylene terephthalamide) (PPTA), poly(m-phenylene isophthalamide) (MPDI), poly(p-aminobenzoic acid), and poly(hexamethylene terephthalamide) (PA6T).

8. Polyamide material according to any of the preceding claims, wherein the covalent bonds between the polyamide molecules that make up the surface of the fibrillar polyamide particles with the matrix polyamide are formed by formation of a copolymer between the polyamide molecules that make up the surface of the fibrillar polyamide particles with the matrix polyamide, in particular wherein the covalent bonds between the polyamide molecules that make up the surface of the fibrillar polyamide particles with the matrix polyamide are amide bonds.

9. Polyamide material according to any of the preceding claims, wherein the polyamide material contains the fibrillar polyamide particles in an amount from 1 to 60 vol.%, in particular from 5 to 60 vol.%, or from 10 to 60 vol.%, or from 15 to 60 vol.% or from 20 to 60 vol.%, based on the total volume of the polyamide material.

10. Polyamide material according to any of the preceding claims, wherein the matrix polyamide is a thermoplastic polyamide, in particular an amorphous thermoplastic polyamide or a semicrystalline thermoplastic polyamide.

11. Polyamide material according to any of the preceding claims, wherein the matrix polyamide is a miscible or immiscible blend or a copolymer of different polyamides.

12. Polyamide material according to any of the preceding claims, wherein the matrix polyamide is selected from the group consisting of poly(epsilon-caprolactam) (PA6), poly(caprylolactam) (PA8), poly(decanolactam) (PA10), poly(undecanolactam) (PA11), poly(laurolactam) (PA12), poly(hexamethylene adipamide) (PA66), specialty polyamides such as poly(hexamethylene azeladiamide) (PA69), poly(hexamethylene sebacamide) (PA610), poly(hexamethylene dodecanoamide) (PA612), poly(tetramethylene adipamide) (PA46), poly(dodecamethylene adipamide) (PA126), poly(epsilon-caprolactam-co-hexamethylene adipamide) (PA6-PA66 copolymer), semi-aromatic polyamides such as poly(m-xylylene adipamide) (MXD6), poly(trimethylhexamethylene terephthalamide) (TMDT), bis(4-aminocyclohexyl)methane-terephthalic acid copolymer (PACMT), poly(hexamethylene isophthalamide) (PA6I), poly(hexamethylene isophthalamide-*co*-hexamethylene terephthalamide) (PA6I-PA6T copolymer), poly(hexamethylene terephthalamide-*co*-isophthalamide) (PA6TI), in particular from hexamethylene diamine with 70% terephthalic acid and 30% isophthalic acid, poly(hexamethylene terephthalamide-*co*-2-methyl pentamethylene terephthalamide) (PA6T-PADT copolymer), poly(hexamethylene adipamide-*co-*hexamethylene terephthalamide) (PA66-PA6T copolymer), poly(epsilon-caprolactam-*co*-hexamethylene terephthalamide) (PA6-PA6T copolymer), copolymers of any of the aforementioned polymers, in particular copolymers of poly(hexamethylene terephthalamide-*co*-isophthalamide) (PA6TI) and poly(hexamethylene sebacamide) (PA610), copolymers of poly(hexamethylene terephthalamide-*co*-isophthalamide) (PA6TI) and poly(hexamethylene adipamide) (PA66), and copolymers of poly(hexamethylene terephthalamide) (PA6T) and poly(2-methyl pentamethylene terephthalamide) (PADT), segmented copolymers of any of the aforementioned polymers with polyesters or polyethers, and blends thereof, in particular blends of poly(epsilon-caprolactam) (PA6) and poly(hexamethylene adipamide) (PA66), blends of poly(hexamethylene terephthalamide-*co*-isophthalamide) (PA6TI) and poly(hexamethylene adipamide) (PA66), blends of poly(hexamethylene terephthalamide-*co*-isophthalamide) (PA6TI) and poly(hexamethylene sebacamide) (PA610), and blends of poly(hexamethylene terephthalamide) (PA6T) and poly(2-methyl pentamethylene terephthalamide) (PADT), more particularly selected from the group consisting of poly(hexamethylene isophthalamide) (PA6I), poly(hexamethylene isophthalamide-*co*-hexamethylene terephthalamide) (PA6I-PA6T copolymer), poly(hexamethylene terephthalamide-*co*-isophthalamide) (PA6TI), in particular from hexamethylene diamine with 70% terephthalic acid and 30% isophthalic acid, poly(hexamethylene terephthalamide-*co*-2-methyl pentamethylene terephthalamide) (PA6T-PADT copolymer), poly(epsilon-caprolactam-*co-*hexamethylene adipamide) (PA6-PA66 copolymer), poly(hexamethylene adipamide-*co*-hexamethylene terephthalamide) (PA66-PA6T copolymer), poly(epsilon-caprolactam-*co*-hexamethylene terephthalamide) (PA6-PA6T copolymer), copolymers of poly(hexamethylene terephthalamide-*co*-isophthalamide) (PA6TI) and poly(hexamethylene sebacamide) (PA610), copolymers of poly(hexamethylene terephthalamide-*co*-isophthalamide) (PA6TI) and poly(hexamethylene adipamide) (PA66), and copolymers of poly(hexamethylene terephthalamide) (PA6T) and poly(2-methyl pentamethylene terephthalamide) (PADT), and blends thereof, in particular blends of poly(epsilon-caprolactam) (PA6) and poly(hexamethylene adipamide) (PA66), blends of poly(hexamethylene terephthalamide-*co*-isophthalamide) (PA6TI) and poly(hexamethylene adipamide) (PA66), blends of poly(hexamethylene terephthalamide-*co*-isophthalamide) (PA6TI) and poly(hexamethylene sebacamide) (PA610), and blends of poly(hexamethylene terephthalamide) (PA6T) and poly(2-methyl pentamethylene terephthalamide) (PADT).

13. Polyamide material according to any of the preceding claims, wherein the polyamide material contains one or more additives selected from the group consisting of other polymers and/or non-polymeric inorganic or organic fillers, rubber tougheners, flame retardants, processing aids, stabilizers, pigments, glass fibers, in particular E-glass fibers, S-glass fibers, S2-glass fibers, R-glass fibers, or C-glass fibers, natural fibers such as hemp, sisal or cellulose, carbon fibers, polyamide fibers, graphene, or mixtures thereof, in particular wherein the polyamide material contains glass fibers, more particularly glass fibers with a tenacity of at least 3000 MPa at 23°C, even more particularly selected from the group consisting of E-glass fibers, R-glass fibers, S-glass fibers, S2-glass fibers, C-glass fibers, and mixtures thereof.

14. Polyamide material according to claim 13, wherein the polyamide material contains the one or more additives in an amount from 1 to 60 vol.%, in particular from 5 to 60 vol.%, or from 10 to 60 vol.%, or from 15 to 60 vol.% or from 20 to 60 vol.%, based on the total volume of the polyamide material.

15. Method for the preparation of a polyamide material according to any of claims 1 to 14, comprising the steps of
a. providing a matrix polyamide;
b. providing a fibrous polyamide material;
c. mixing the fibrous polyamide material and the matrix polyamide for at least 2 minutes and at most 60 minutes at a temperature of at least 240°C.

16. The method according to claim 15, wherein the mixing is conducted for at least 3 minutes, in particular for at least 4 minutes, or for at least 5 minutes, or for at least 6 minutes, or for at least 7 minutes, or for at least 8 minutes, or for at least 9 minutes, or for at least 10 minutes; and/or wherein the mixing is conducted for at most 50 minutes, in particular at most 45 minutes, or at most 40 minutes, or at most 35 minutes, or at most 30 minutes, or at most 25 minutes, or at most 20 minutes.

17. The method according to any of claims 15 to 16, wherein the mixing is conducted at a temperature of at least 245°C, in particular at least 250°C, or at least 255°C, or at least 260°C, or at least 265°C, or at least 270°C, or at least 275°C, or at least 280°C; and/or wherein the mixing is conducted at a temperature of at most 340°C, in particular at most 335°C, or at most 330°C, or at most 325°C, or at most 320°C.

18. The method according to any of claims 15 to 17, wherein the constituting particles of the fibrous polyamide material are further **characterized by** one or more features of the fibrillar polyamide particles as defined in any of claims 3 to 7.

19. The method according to any of claims 15 to 18, wherein the fibrous polyamide material is employed in an amount from 1 to 60 vol.%, in particular from 5 to 60 vol.%, or from 10 to 60 vol.%, or from 15 to 60 vol.% or from 20 to 60 vol.%, based on the total volume of the polyamide material.

20. The method according to any of claims 15 to 19, wherein the matrix polyamide is as defined in any of claims 10 to 12.

21. The method according to any of claims 15 to 20, wherein in one or more additional steps, one or more additives selected from the group consisting of other polymers and/or non-polymeric inorganic or organic fillers, rubber tougheners, flame retardants, processing aids, stabilizers, pigments, glass fibers, in particular E-glass fibers, S-glass fibers, S2-glass fibers, R-glass fibers, or C-glass fibers, natural fibers such as hemp, sisal or cellulose, carbon fibers, polyamide fibers, graphene, and mixtures thereof, in particular E-glass fibers, R-glass fibers, S-glass fibers, S2-glass fibers, or C-glass fibers, and mixtures thereof, are provided and mixed with the matrix polyamide and the fibrous polyamide material, in particular with the polyamide fibers.

22. The method according to any of claims 15 to 21, wherein the mixing is carried out by extrusion, in particular by melt extrusion.

23. Polyamide material obtainable according to a method according to any of claims 15 to 22.

24. Use of a polyamide material according to any of claims 1 to 14, or 23 for the manufacture of molded parts, fibers or foils.

25. Molded parts, fibers or foils containing a polyamide material according to any of claims 1 to 14, or 23.
